# EUROPEAN PATENT APPLICATION

(11) **EP 4 838 984 A1**
(43) Date of publication of application: **11.11.2026**
(21) Application number: 25751420.8
(22) Date of filing: 27.01.2025
(51) Int. Cl.: H04W 72/1268

(54) **METHOD AND APPARATUS USED IN COMMUNICATION NODE FOR WIRELESS COMMUNICATION**

(30) Priority: 05.02.2024 CN 202410162269
(71) Applicant: Honor Device Co., Ltd., Shenzhen, Guangdong 518040 (CN)
(72) Inventor: YU, Qiaoling, Shenzhen, Guangdong 518040 (CN); REN, Nannan, Shenzhen, Guangdong 518040 (CN); ZHANG, Xiaobo, Shenzhen, Guangdong 518040 (CN)
(74) Representative: Goddar, Heinz J.
(86) International application number: PCT/CN2025/075367
(87) International publication number: WO 2025/167820

(57) **Abstract**

This application discloses a method and apparatus in a communication node used for wireless communication. A communication node receives a first RRC message, where the first RRC message includes configuration information of a first candidate cell, the first candidate cell is a candidate of a first serving cell, and the configuration information of the first candidate cell includes a target configuration and a first condition; and initiates a first process, where the first process includes initiating random access on the first candidate cell, and initiating a first process depends on at least one of measurement or a first timer not running; or the first process includes starting UE-based timing advance measurement, and initiating a first process depends on at least the former of the measurement and the first timer not running. The solution proposed in this application is beneficial for enhancing triggering of early uplink synchronization for conditional LTM, beneficial for obtaining TA of early uplink synchronization for conditional LTM, and beneficial for improving the robustness of the handover process.

## Description

This application claims priority to Chinese Patent Application No. 202410162269.3, filed with the China National Intellectual Property Administration on February 05, 2024 and entitled "METHOD AND APPARATUS IN COMMUNICATION NODE USED FOR WIRELESS COMMUNICATION", which is incorporated herein by reference in its entirety.

### TECHNICAL FIELD

This application relates to a transmission method and apparatus in a wireless communication system, and in particular, to a method and apparatus for triggering early uplink synchronization.

### BACKGROUND

With the continuous development of wireless communication, requirements for mobility, a transmission latency, and a system capacity are increasingly high. 3GPP completed standardization of L1 (Layer 1, layer 1)/L2 (Layer 2, layer 2) triggered mobility (L1/L2 Triggered Mobility, LTM) through the "further NR (New Radio, new radio) mobility enhancements (Further NR mobility enhancements)" work item (Work Item, WI); and to further enhance mobility, conditional LTM or inter-CU LTM becomes important research content in 3GPP Release 19.

In addition, in future evolution, 3GPP further enhances some key technologies, for example, applying AI (Artificial Intelligence, artificial intelligence) or ML (Machine Learning, machine learning) to mobility, to improve mobility performance; and further researches network energy saving (Network Energy Saving, NES), to reduce environmental impact.

To enhance an LTM process, LTM supports early uplink synchronization. A serving cell triggers random access on an LTM candidate cell via a PDCCH order. A UE does not receive an RAR on the LTM candidate cell after sending a Preamble on the LTM candidate cell, and the serving cell sends TA of the candidate cell to the UE via an LTM Cell Switch Command MAC CE. Given that early uplink synchronization can greatly reduce a handover latency, applying early uplink synchronization to conditional LTM, inter-CU LTM, a CHO, or CPC has a good standardization prospect.

### SUMMARY

The inventors found through research that existing early uplink synchronization depends on an LTM Cell Switch Command MAC CE, making it difficult to apply early uplink synchronization to conditional LTM. In one aspect, in the conditional LTM, if a network configures an LTM candidate cell and a corresponding handover condition, and a UE triggers LTM based on measurement, the UE cannot obtain TA of the LTM candidate cell via the LTM Cell Switch Command MAC CE. In another aspect, because cell handover time of the conditional LTM is uncertain, an excessively early occasion for early uplink synchronization may lead to a decrease in TA accuracy during LTM cell handover, and an excessively late occasion for early uplink synchronization may make it difficult to obtain TA in time before LTM cell handover. Therefore, it is necessary to enhance triggering of early uplink synchronization for the conditional LTM.

In view of the foregoing problem, this application provides a solution. An NR system is used as an example in the foregoing problem descriptions. This application is also applicable to scenarios such as an LTE (Long-Term Evolution, long-term evolution) system or an LTE-A (Long-Term Evolution Advanced, long-term evolution advanced) system or a future 6G system, achieving technical effects similar to those achieved for the NR system. Moreover, although this application provides specific implementations for a 3GPP system, this application can also be used in a non-3GPP system scenario, achieving technical effects similar to those achieved for the 3GPP system. Further, a unified design solution used for different scenarios also helps reduce hardware complexity and costs. Further, although this application is originally intended for a Uu air interface, this application can also be used for a PC5 interface, achieving technical effects similar to those achieved for the Uu air interface. Further, although this application is originally intended for conditional LTM, this application can also be used for LTM, a CHO, CPC, or SCPAC, achieving technical effects similar to those achieved for the conditional LTM. Further, although this application is originally intended for a terminal-to-base station scenario, this application is also applicable to a V2X (Vehicle-to-Everything, vehicle-to-everything) scenario, and communication scenarios between a terminal and a relay, and between a relay and a base station, achieve technical effects similar to those achieved for the terminal-to-base station scenario. Further, although is originally intended for the terminal-to-base station scenario, this application is also applicable to an IAB (Integrated Access and Backhaul, integrated access and backhaul) communication scenario, achieving technical effects similar to those achieved for the terminal-to-base station scenario. Further, although is originally intended for a terrestrial network (Terrestrial Network, TN) scenario, this application is also applicable to a non-terrestrial network (Non-Terrestrial Network, NTN) communication scenario, achieving technical effects similar to those achieved for the TN scenario. In addition, using a unified solution for different scenarios also helps reduce hardware complexity and costs.

In an embodiment, interpretation of terminology (Terminology) in this application refers to the definitions in the 3GPP specification protocol TS36 series.

In an embodiment, interpretation of terminology in this application refers to the definitions in the 3GPP specification protocol TS38 series.

In an embodiment, interpretation of the terminology in this application refers to the definitions in the 3GPP specification protocol TS37 series.

It should be noted that, in a case of no conflict, embodiments of any node and features in the embodiments of this application may be applied to any other node. In a case of no conflict, embodiments of this application and features in the embodiments may be arbitrarily combined with each other.

This application discloses a method in a first node used for wireless communication, including:
receiving a first RRC message, where the first RRC message includes a first condition and a target configuration of the first candidate cell, and the first condition is a condition under which the target configuration of the first candidate cell is applied; and initiating a first process; and initiating a first process.

The first process is for early uplink synchronization for the first candidate cell.

In an embodiment, the first process includes initiating random access on the first candidate cell, and initiating a first process depends on at least one of measurement or a first timer not running.

In an embodiment, the first process includes starting UE-based timing advance measurement, and initiating a first process depends on at least the former of the measurement and the first timer not running.

In an embodiment, a problem to be resolved by this application includes: how to obtain early uplink synchronization for conditional mobility, where the conditional mobility includes conditional LTM or a CHO or CPC.

In an embodiment, a problem to be resolved by this application includes: how to obtain early uplink synchronization for conditional LTM.

In an embodiment, a problem to be resolved by this application includes: how to enhance an early uplink synchronization process of LTM, so as to be compatible with conditional LTM.

In an embodiment, a problem to be resolved by this application includes: how to design a proper triggering mechanism, so that an early uplink synchronization process is triggered at an appropriate occasion.

In an embodiment, a problem to be resolved by this application includes: how to design a proper fallback mechanism to enhance robustness of an early uplink synchronization process of conditional LTM.

In an embodiment, a characteristic of the foregoing method includes: Initiating the first process depends on at least one of measurement or the first timer not running.

In an embodiment, a characteristic of the foregoing method includes: The first process is for early uplink synchronization for the first candidate cell.

In an embodiment, a characteristic of the foregoing method includes: The first process includes initiating random access on the first candidate cell.

In an embodiment, a benefit of the foregoing method includes: The signaling process is beneficial for obtaining TA of early uplink synchronization for the conditional LTM.

In an embodiment, a benefit of the foregoing method includes: This is beneficial for triggering early uplink synchronization.

In an embodiment, a benefit of the foregoing method includes: This is beneficial for improving robustness of a handover process.

According to an aspect of this application, initiating a first process depends on a measurement result for the first candidate cell satisfying a first threshold, and the first RRC message includes the first threshold.

In an embodiment, a benefit of the foregoing method includes: This is beneficial for preventing excessive early triggering of early uplink synchronization.

In an embodiment, a benefit of the foregoing method includes: This is beneficial for reducing signaling overheads.

According to an aspect of this application, the first condition includes a measurement result for the first candidate cell satisfying a second threshold, the first RRC message includes the second threshold, and the first threshold is different from the second threshold.

In an embodiment, a benefit of the foregoing method includes: This is beneficial for preventing excessive early triggering of conditional LTM cell handover.

According to an aspect of this application, initiating a first process depends on a measurement result for the first serving cell satisfying a third threshold, and the first RRC message includes the third threshold.

In an embodiment, a benefit of the foregoing method includes: This is beneficial for preventing excessive late triggering of early uplink synchronization.

In an embodiment, a benefit of the foregoing method includes: This is beneficial for reducing signaling overheads.

According to an aspect of this application, the first condition includes a measurement result for the first serving cell satisfying a fourth threshold, the first RRC message includes the fourth threshold, and the third threshold is different from the fourth threshold.

In an embodiment, a benefit of the foregoing method includes: This is beneficial for preventing excessive late triggering of conditional LTM cell handover.

According to an aspect of this application, including:
receiving first signaling, and starting the first timer in response to the first signaling being received.

The first signaling indicates a timing advance amount of the first candidate cell.

In an embodiment, a benefit of the foregoing method includes: This is beneficial for a UE to obtain TA of a candidate cell in an early uplink synchronization process.

In an embodiment, a benefit of the foregoing method includes: This is beneficial for a UE to maintain TA of a candidate cell.

In an embodiment, a benefit of the foregoing method includes: This is beneficial for improving robustness of a handover process.

According to an aspect of this application, the first process includes sending second signaling and receiving third signaling, the second signaling triggers the third signaling, and the third signaling triggers initiation of random access on the first candidate cell.

In an embodiment, a benefit of the foregoing method includes: This is beneficial for requesting CFRA resources for early uplink synchronization.

In an embodiment, a benefit of the foregoing method includes: This is beneficial for LTM without RACH to fall back to RACH-based LTM.

In an embodiment, a benefit of the foregoing method includes: This is beneficial for conditional LTM to fall back to LTM.

According to an aspect of this application, the first process includes monitoring a random access response on the first candidate cell in the random access, and the first RRC message includes a time-frequency resource for monitoring the random access response.

In an embodiment, a benefit of the foregoing method includes: This is beneficial for reducing signaling interaction.

This application discloses a method in a second node used for wireless communication, including:
sending a first RRC message, where the first RRC message includes a first condition and a target configuration of the first candidate cell, and the first condition is a condition under which the target configuration of the first candidate cell is applied.

A receiving party of the first RRC message initiates a first process, and the first process is for early uplink synchronization for the first candidate cell.

In an embodiment, the first process includes initiating random access on the first candidate cell, and initiating a first process depends on at least one of measurement or a first timer not running.

In an embodiment, the first process includes initiating random access on the first candidate cell, and initiating a first process depends on measurement.

In an embodiment, the first process includes initiating random access on the first candidate cell, and initiating a first process depends on a first timer not running.

In an embodiment, the first process includes initiating random access on the first candidate cell, and initiating a first process depends on measurement and a first timer not running.

In an embodiment, the first process includes starting UE-based timing advance measurement, and initiating a first process depends on at least the former of the measurement and the first timer not running.

In an embodiment, the first process includes starting UE-based timing advance measurement, and initiating a first process depends on measurement.

In an embodiment, the first process includes starting UE-based timing advance measurement, and initiating a first process depends on a first timer not running.

According to an aspect of this application, initiating a first process depends on a measurement result for the first candidate cell satisfying a first threshold, and the first RRC message includes the first threshold.

According to an aspect of this application, the first condition includes a measurement result for the first candidate cell satisfying a second threshold, the first RRC message includes the second threshold, and the first threshold is different from the second threshold.

According to an aspect of this application, initiating a first process depends on a measurement result for the first serving cell satisfying a third threshold, and the first RRC message includes the third threshold.

According to an aspect of this application, the first condition includes a measurement result for the first serving cell satisfying a fourth threshold, the first RRC message includes the fourth threshold, and the third threshold is different from the fourth threshold.

According to an aspect of this application, including:
sending first signaling.

The first signaling indicates a timing advance amount of the first candidate cell.

According to an aspect of this application, including:
receiving second signaling, and sending third signaling in response to receiving the second signaling.

The third signaling triggers a receiving party of the third signaling to initiate random access on the first candidate cell.

According to an aspect of this application, the first process includes monitoring a random access response on the first candidate cell in the random access, and the first RRC message includes a time-frequency resource for monitoring the random access response.

This application discloses a first node used for wireless communication, including:
a first receiver, receiving a first RRC message, where the first RRC message includes a first condition and a target configuration of the first candidate cell, and the first condition is a condition under which the target configuration of the first candidate cell is applied; and
a first processor, initiating a first process.

The first process includes initiating random access on the first candidate cell, and initiating a first process depends on at least one of measurement or a first timer not running; or the first process includes starting UE-based timing advance measurement, and initiating a first process depends on at least the former of the measurement and the first timer not running; and the first process is for early uplink synchronization for the first candidate cell.

This application discloses a second node used for wireless communication, including:
a second transmitter, sending a first RRC message, where the first RRC message includes a first condition and a target configuration of the first candidate cell, and the first condition is a condition under which the target configuration of the first candidate cell is applied.

A receiving party of the first RRC message initiates a first process, where the first process includes initiating random access on the first candidate cell, and initiating a first process depends on at least one of measurement or a first timer not running; or the first process includes starting UE-based timing advance measurement, and initiating a first process depends on at least the former of the measurement and the first timer not running; and the first process is for early uplink synchronization for the first candidate cell.

In an embodiment, compared with a conventional solution, this application has the following advantages:
- . the signaling process is beneficial for obtaining TA of early uplink synchronization for conditional LTM;
- . the signaling process is beneficial for triggering early uplink synchronization for conditional LTM at an appropriate occasion;
- . this is beneficial for improving robustness of a handover process;
- . this is beneficial for a fast handover of a UE;
- . this is beneficial for transmitting TA obtained during early uplink synchronization for a plurality of candidate cells;
- . this is beneficial for determining validity of TA for early uplink synchronization;
- . this is beneficial for a UE to maintain TA of a candidate cell; and
- . this is beneficial for uplink alignment of the first candidate cell.

### BRIEF DESCRIPTION OF DRAWINGS

FIG. 1 is a flowchart of triggering early uplink synchronization for conditional LTM according to an embodiment of this application;
FIG. 2 is a schematic diagram of a network architecture according to an embodiment of this application;
FIG. 3 is a schematic diagram of an embodiment of radio protocol architectures of a user plane and a control plane according to an embodiment of this application;
FIG. 4 is a schematic diagram of a first communication device and a second communication device according to an embodiment of this application;
FIG. 5 is a flowchart of transmission of a wireless signal according to an embodiment of this application;
FIG. 6 is a schematic diagram of a first threshold according to an embodiment of this application;
FIG. 7 is a schematic diagram of a second threshold according to an embodiment of this application;
FIG. 8 is a schematic diagram of a third threshold according to an embodiment of this application;
FIG. 9 is a schematic diagram of a fourth threshold according to an embodiment of this application;
FIG. 10 is a block diagram of a structure of a processing apparatus in a first node according to an embodiment of this application;
FIG. 11 is a block diagram of a structure of a processing apparatus in a second node according to an embodiment of this application;
FIG. 12 is a schematic diagram of an artificial intelligence processing system according to an embodiment of this application; and
FIG. 13 is a schematic diagram of receiving a random access response on a first candidate cell according to an embodiment of this application.

### DESCRIPTION OF EMBODIMENTS

The technical solutions of this application are further described in detail below with reference to the accompanying drawings. It should be noted that, in a case of no conflict, embodiments in this application and features in the embodiments can be arbitrarily combined with each other.

### Embodiment 1

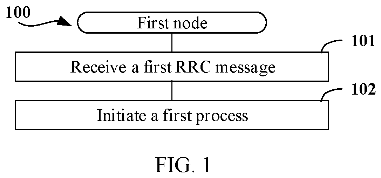

Embodiment 1 illustrates a flowchart of triggering early uplink synchronization for conditional LTM according to an embodiment of this application, as shown in FIG. 1. In FIG. 1, each block represents one step, and it should be particularly emphasized that an order of the blocks in the figure does not represent a time sequence relationship between the represented steps.

In Embodiment 1, a first node in this application receives a first RRC message in step 101, where the first RRC message includes a first condition and a target configuration of the first candidate cell, and the first condition is a condition under which the target configuration of the first candidate cell is applied; and initiates a first process in step 102, where the first process includes initiating random access on the first candidate cell, and initiating a first process depends on at least one of measurement or a first timer not running; or the first process includes starting UE-based timing advance measurement, and initiating a first process depends on at least the former of the measurement and the first timer not running. The first process is for early uplink synchronization for the first candidate cell.

In an embodiment, the first RRC message is an RRCReconfiguration message.

In an embodiment, the first RRC message includes an LTM-Config field, and the LTM-Config field includes the first condition and the target configuration of the first candidate cell.

In an embodiment, the first RRC message includes an LTM-Candidate field, and the LTM-Candidate field includes the first condition and the target configuration of the first candidate cell.

In an embodiment, the first RRC message includes a ConditionalReconfiguration field, and the ConditionalReconfiguration field includes the first condition and the target configuration of the first candidate cell.

In an embodiment, a condExecutionCond field in the first RRC message includes the first condition.

In an embodiment, a condExecutionCondLTM field in the first RRC message includes the first condition.

In an embodiment, a condRRCReconfig field in the first RRC message includes the first condition.

In an embodiment, an LTMcondReconfig field in the first RRC message includes the first condition.

In an embodiment, an LTM-Config field in the first RRC message includes the first condition.

In an embodiment, an LTM-Candidate field in the first RRC message includes the first condition.

In an embodiment, the first RRC message including the first condition and the target configuration of the first candidate cell means: The first RRC message configures the first condition and the target configuration of the first candidate cell.

In an embodiment, the first RRC message including the first condition and the target configuration of the first candidate cell means: The first RRC message indicates the first condition and the target configuration of the first candidate cell.

In an embodiment, the first candidate cell being a candidate of a first serving cell means: The first candidate cell is an LTM candidate cell of the first serving cell.

In an embodiment, the first candidate cell being a candidate of a first serving cell means: The first candidate cell is a conditional LTM candidate cell of the first serving cell.

In an embodiment, the first candidate cell being a candidate of a first serving cell means: The first candidate cell is a C-LTM candidate cell of the first serving cell.

In an embodiment, the first candidate cell being a candidate of a first serving cell means: The first candidate cell is a continuous LTM candidate cell of the first serving cell.

In an embodiment, the first candidate cell being a candidate of a first serving cell means: The first candidate cell is a CHO of the first serving cell.

In an embodiment, the first candidate cell being a candidate of a first serving cell means: The first serving cell is an SpCell, and the first candidate cell is a candidate SpCell, where the SpCell is a PCell or a PSCell.

In an embodiment, the first condition is an execution condition for a conditional LTM cell handover to the first candidate cell.

In an embodiment, the first condition depends on measurement.

In a sub-embodiment of the foregoing embodiment, the measurement is L1 measurement.

In a sub-embodiment of the foregoing embodiment, the measurement includes measurement for a reference signal of the first candidate cell.

In a sub-embodiment of the foregoing embodiment, the measurement includes measurement for a reference signal of the first serving cell.

In a sub-embodiment of the foregoing embodiment, the measurement includes measurement for a reference signal of the first serving cell and a reference signal of the first candidate cell.

In an embodiment, the first condition depends on a decision of an AI module.

In an embodiment, the target configuration refers to RRC reconfiguration information of the first candidate cell.

In an embodiment, the target configuration refers to a condRRCReconfig field.

In an embodiment, the target configuration refers to an octet String including an RRCReconfiguration message.

In an embodiment, in response to the first condition being satisfied, the target configuration is applied.

In an embodiment, the first process includes sending a first Preamble.

In a sub-embodiment of the foregoing embodiment, in response to the first Preamble being sent, the first process is completed.

In a sub-embodiment of the foregoing embodiment, the first process includes receiving the first signaling.

In a sub-embodiment of the foregoing embodiment, reception of the first signaling is after sending of the first Preamble.

In a sub-embodiment of the foregoing embodiment, the first node descrambles the first signaling by using an RA-RNTI corresponding to the first Preamble.

In a sub-embodiment of the foregoing embodiment, the first node descrambles the first signaling using a C-RNTI of the first node in the first serving cell.

In a sub-embodiment of the foregoing embodiment, in response to receiving the first signaling, the first process is completed.

In an embodiment, initiating a first process refers to triggering the first process.

In an embodiment, initiating a first process refers to starting the first process.

In an embodiment, initiating a first process refers to enabling the first process.

In an embodiment, initiating a first process refers to initializing the first process.

In an embodiment, initiating a first process refers to performing the first process.

In an embodiment, initiating a first process depends on measurement.

In an embodiment, the phrase "initiating a first process depends on measurement" means: Initiating a first process depends on a measurement result for the first candidate cell.

In an embodiment, the phrase "initiating a first process depends on measurement" means: Initiating a first process depends on a measurement result for the first serving cell.

In an embodiment, the phrase "initiating a first process depends on measurement" means: Initiating a first process depends on depends on a measurement result for the first candidate cell and a measurement result for the first serving cell.

In an embodiment, initiating a first process depends on the first timer not running.

In a sub-embodiment of the foregoing embodiment, under an assumption that the first timer is running, the first process is not initiated.

In a sub-embodiment of the foregoing embodiment, as long as the first timer is running, the first process is not initiated.

In an embodiment, initiating a first process depends on measurement and the first timer not running.

In an embodiment, initiating a first process depends on measurement or the first timer not running.

In an embodiment, initiating a first process depends on a decision of an AI module.

In an embodiment, initiating a first process depends on an output of an AI module.

In an embodiment, a first receiver receives a first RRC message, where the first RRC message includes configuration information of a first candidate cell, the first candidate cell is a candidate of a first serving cell, the configuration information of the first candidate cell includes a target configuration and a first condition, and the first condition is a condition under which the target configuration is applied. A first processor initiates random access on the first candidate cell, where the initiating random access on the first candidate cell depends on at least one of measurement or a first timer not running. The first process is for early uplink synchronization for the first candidate cell, and the first process is initiating random access on the first candidate cell.

In an embodiment, the first process includes sending at least one piece of signaling on the first serving cell before initiating random access on the first candidate cell.

In an embodiment, the first process includes sending at least one piece of signaling on the first candidate cell before initiating random access on the first candidate cell.

In an embodiment, the at least one piece of signaling is at a physical layer.

In an embodiment, the at least one piece of signaling is at a MAC sublayer.

In an embodiment, the at least one piece of signaling is at an RRC sublayer.

In an embodiment, the at least one piece of signaling is the second signaling.

In an embodiment, the configuration information of the first candidate cell includes a random access resource for the random access.

In an embodiment, the random access resource is a CFRA resource.

In a sub-embodiment of the foregoing embodiment, the CFRA resource is configured by the first RRC message.

In a sub-embodiment of the foregoing embodiment, the CFRA resource is configured by the third signaling.

In a sub-embodiment of the foregoing embodiment, the CFRA resource is configured by a RACH-ConfigDedicated field in the first RRC message.

In a sub-embodiment of the foregoing embodiment, the CFRA resource is configured by a CFRA field in the first RRC message.

In a sub-embodiment of the foregoing embodiment, the CFRA resource is one or more CFRA-SSB-Resource subfields.

In a sub-embodiment of the foregoing embodiment, each CFRA-SSB-Resource subfield includes an SSB index and a random access Preamble index.

In a sub-embodiment of the foregoing embodiment, the CFRA resource includes a random access occasion (Random Access Occasion) configuration and an SSB resource.

In a sub-embodiment of the foregoing embodiment, the CFRA resource is indicated by a Random Access Preamble index field, a UL/SUL indicator field, an SS/PBCH index field, a PRACH Mask index field, and a Cell indicator field in the third signaling.

In an embodiment, the configuration information includes a CBRA configuration of the random access.

In an embodiment, the random access initiated on the first candidate cell is CFRA.

In an embodiment, the random access initiated on the first candidate cell is CBRA.

In an embodiment, a Preamble Index of the random access initiated on the first candidate cell is a Preamble Index in a specified Preamble Index set.

In an embodiment, the random access initiated on the first candidate cell is CBRA, and a Preamble Index of the random access is a Preamble Index in a specified Preamble Index set.

In an embodiment, the first timer is a TimeAlignmentTimer.

In a sub-embodiment of the foregoing embodiment, the TimeAlignmentTimer is for timing advance of the first candidate cell.

In a sub-embodiment of the foregoing embodiment, the TimeAlignmentTimer is for timing advance of the first serving cell.

In an embodiment, a value of the first timer is configured by an RRC message.

In an embodiment, a value of the first timer is configured by the first RRC message.

In an embodiment, in response to the first timer being at expiry, initiation of the first process is triggered.

In an embodiment, in response to receiving a timing advance command, the first timer is started or restarted.

In a sub-embodiment of the foregoing embodiment, the timing advance command is for timing advance of the first candidate cell.

In a sub-embodiment of the foregoing embodiment, the timing advance command is for timing advance of the first serving cell.

In an embodiment, the first process is for early uplink synchronization for the first candidate cell.

In an embodiment, the first process is UE-based timing advance measurement for the first candidate cell.

In an embodiment, the first process includes early uplink synchronization for the first candidate cell.

In an embodiment, the first process includes UE-based timing advance measurement for the first candidate cell.

In an embodiment, the first process is for early uplink synchronization for the first candidate cell and UE-based timing advance measurement for the first candidate cell.

In an embodiment, the UE-based timing advance measurement means: A UE measures timing advance.

In an embodiment, the UE-based timing advance measurement refers to determining timing advance based on UE measurement.

In an embodiment, the UE-based timing advance measurement includes a process in which a UE derives a timing advance amount to be applied to a first uplink transmission to the first candidate cell.

In an embodiment, the UE-based timing advance measurement includes: A UE performs a first measurement process.

In an embodiment, the first measurement process is L3 measurement.

In an embodiment, the first measurement process is L1 measurement.

In an embodiment, the first measurement process includes L3 measurement.

In an embodiment, the first measurement process includes L1 measurement.

In an embodiment, the first measurement process is RSTD measurement.

In an embodiment, the first measurement process is SSB-based measurement.

In an embodiment, the first measurement process is PRS-based measurement.

In an embodiment, the first measurement process refers to measure a downlink reception timing difference between the first serving cell and the first candidate cell.

In an embodiment, the UE-based timing advance measurement includes: A UE performs a first derivation process.

In an embodiment, the first derivation process refers to a process of deriving uplink timing advance amount of the first candidate cell based on a downlink reception timing difference between the first serving cell and the first candidate cell, effective uplink timing of the first candidate cell, and a downlink transmission timing difference between the first serving cell and the first candidate cell.

In an embodiment, the UE-based timing advance measurement includes: performing the first derivation process.

In a sub-embodiment of the foregoing embodiment, the first derivation process is: uplink timing of the first candidate cell = uplink timing of the first serving cell + 2 × downlink reception timing difference.

In a sub-embodiment of the foregoing embodiment, the first derivation process is: uplink timing of the first candidate cell = uplink timing of the first serving cell - 2 × downlink reception timing difference.

In a sub-embodiment of the foregoing embodiment, the first derivation process is: uplink timing of the first candidate cell = uplink timing of the first serving cell + 2 × (downlink reception timing difference - downlink transmission timing difference).

In a sub-embodiment of the foregoing embodiment, the first derivation process is: uplink timing of the first candidate cell = uplink timing of the first serving cell - 2 × (downlink reception timing difference - downlink transmission timing difference).

In a sub-embodiment of the foregoing embodiment, the first derivation process is: uplink timing of the first candidate cell = uplink timing of the first serving cell + 2 × (downlink reception timing difference + downlink transmission timing difference).

In a sub-embodiment of the foregoing embodiment, the first derivation process is: uplink timing of the first candidate cell = uplink timing of the first serving cell - 2 × (downlink reception timing difference + downlink transmission timing difference).

In a sub-embodiment of the foregoing embodiment, the first time interval is a downlink reception-transmission timing difference.

In a sub-embodiment of the foregoing embodiment, the downlink reception timing difference refers to a downlink reception timing difference of the first candidate cell relative to the first serving cell.

In a sub-embodiment of the foregoing embodiment, the downlink reception-transmission timing difference refers to a downlink transmission timing difference of the first candidate cell relative to the first serving cell.

In a sub-embodiment of the foregoing embodiment, the downlink reception timing difference refers to a downlink reception timing difference of the first serving cell relative to the first candidate cell.

In a sub-embodiment of the foregoing embodiment, the downlink reception-transmission timing difference refers to a downlink transmission timing difference of the first serving cell relative to the first candidate cell.

In an embodiment, the UE-based timing advance measurement is implemented UE-implemented.

In an embodiment, the UE-based timing advance measurement is based on a 3GPP protocol.

In an embodiment, the UE-based timing advance measurement is partially UE-implemented and partially based on a 3GPP protocol.

In an embodiment, the first measurement process is UE-implemented.

In an embodiment, the first derivation process is based on a 3GPP protocol.

In an embodiment, the first measurement process is based on a 3GPP protocol.

In an embodiment, the first derivation process is UE-implemented.

In an embodiment, the first process includes starting UE-based timing advance measurement, and initiating a first process depends on at least the former of the measurement and the first timer not running.

In a sub-embodiment of the foregoing embodiment, the first process includes starting UE-based timing advance measurement, and initiating a first process depends on measurement.

In a sub-embodiment of the foregoing embodiment, the first process includes starting UE-based timing advance measurement, and initiating a first process depends on measurement and a first timer not running.

In a sub-embodiment of the foregoing embodiment, a first receiver receives a first RRC message, where the first RRC message includes a first condition and a target configuration of the first candidate cell, the first condition is a condition under which the target configuration is applied. A first processor starts UE-based timing advance measurement, where the starting UE-based timing advance measurement depends on at least the former of the measurement and the first timer not running. The first process is for early uplink synchronization for the first candidate cell, and the first process is starting the UE-based timing advance measurement.

In an embodiment, the starting UE-based timing advance measurement depending on at least the former of measurement and a first timer not running means: When the first timer is running, the starting UE-based timing advance measurement depends on the measurement, where the first timer is a TimeAlignmentTimer for timing advance of the first serving cell.

In an embodiment, the starting UE-based timing advance measurement depending on at least the former of measurement and a first timer not running means: When the first timer is not running, the starting UE-based timing advance measurement depends on the measurement, where the first timer is a TimeAlignmentTimer for timing advance of the first candidate cell.

In an embodiment, the starting UE-based timing advance measurement depending on at least the former of measurement and a first timer not running means: When the first timer is not running and the second timer is running, the starting UE-based timing advance measurement depends on the measurement, where the first timer is a TimeAlignmentTimer for timing advance of the first candidate cell, and the second timer is a TimeAlignmentTimer for timing advance of the first serving cell.

In an embodiment, the starting UE-based timing advance measurement depending on at least the former of measurement and a first timer not running means: When the first timer is not running, the starting UE-based timing advance measurement depends on the measurement; or when the first timer is running, the starting UE-based timing advance measurement depends on a signaling indication of the first serving cell, where the first timer is a TimeAlignmentTimer for timing advance of the first serving cell.

In an embodiment, the starting UE-based timing advance measurement refers to triggering the UE-based timing advance measurement.

In an embodiment, the early uplink synchronization refers to uplink synchronization before the target configuration of the first candidate cell is applied.

In an embodiment, the early uplink synchronization refers to uplink synchronization before the first condition is satisfied.

### Embodiment 2

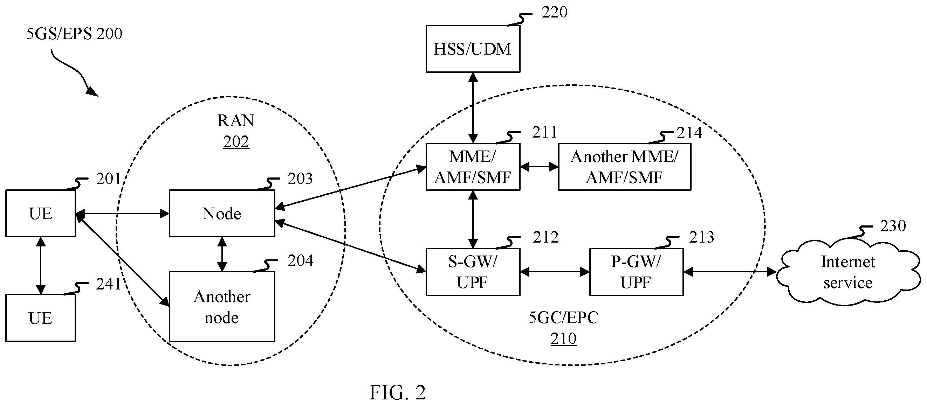

Embodiment 2 illustrates a schematic diagram of a network architecture according to an embodiment of this application, as shown in FIG. 2. FIG. 2 describes a network architecture 200 of a 5G NR (New Radio, new radio)/LTE (Long-Term Evolution, long-term evolution)/LTE-A (Long-Term Evolution Advanced, long-term evolution advanced) system. The 5G NR/LTE/LTE-A network architecture 200 may be referred to as a 5GS (5G System)/EPS (Evolved Packet System, evolved packet system) 200 or some other suitable terminology. The 5GS/EPS 200 includes at least one of a UE (User Equipment, user equipment) 201, a RAN (radio access network) 202, a 5GC (5G Core Network, 5G core network)/EPC (Evolved Packet Core, evolved packet core) 210, an HSS (Home Subscriber Server, home subscriber server)/UDM (Unified Data Management, unified data management) 220, and an Internet service 230. The 5GS/EPS may be interconnected with another access network, but these entities/interfaces are not shown for simplicity. As shown in the figure, the 5GS/EPS provides a packet switching service. However, a person skilled in the art will readily understand that the various concepts presented throughout this application can be extended to a network providing a circuit switching service or another cellular network. The RAN includes a node 203 and another node 204. The node 203 provides user and control plane protocol termination toward the UE 201. The node 203 may be connected to the another node 204 through an Xn interface (for example, backhaul)/X2 interface. The node 203 may also be referred to as a base station, a base transceiver station, a radio base station, a radio transceiver, a transceiver function, a basic service set (BSS), an extended service set (ESS), a TRP (transmission reception point), or some other suitable terminology. The node 203 provides an access point to the 5GC/EPC 210 for the UE 201. Instances of the UE 201 include a cellular phone, a smart phone, a session initiation protocol (SIP) phone, a laptop computer, a personal digital assistant (PDA), satellite radio, non-terrestrial base station communication, satellite mobile communication, a global positioning system, a multimedia apparatus, a video apparatus, a digital audio player (for example, an MP3 player), a camera, a game console, a drone, a flight vehicle, a narrowband Internet of things device, a machine type communication device, a land transportation means, an automobile, a wearable device, or any other similar functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminology. The node 203 is connected to the 5GC/EPC 210 through an S1/NG interface. The 5GC/EPC 210 includes an MME (Mobility Management Entity, mobility management entity)/AMF (Authentication Management Field, authentication management field)/SMF (Session Management Function, session management function) 211, another MME/AMF/SMF 214, an S-GW (Service Gateway, service gateway)/UPF (User Plane Function, user plane function) 212, and a P-GW (Packet Date Network Gateway, packet data network gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocal, Internet protocol) packets are transmitted through the S-GW/UPF 212, and the S-GW/UPF212 is connected to the P-GW/UPF 213. The P-GW provides UE IP address allocation and another function. The P-GW/UPF 213 is connected to the Internet service 230. The Internet service 230 includes corresponding Internet Protocol services of an operator, which may specifically include Internet, intranet, IMS (IP Multimedia Subsystem, IP multimedia subsystem), and packet switching streaming services.

In an embodiment, the UE 201 corresponds to the first node in this application.

In an embodiment, the UE 201 is a user equipment (User Equipment, UE).

In an embodiment, the UE 201 is a base station (BaseStation, BS) device.

In an embodiment, the UE 201 is a relay (Relay) device.

In an embodiment, the UE 201 is a gateway (Gateway) device.

In an embodiment, the node 203 corresponds to the second node in this application.

In an embodiment, the node 203 is a base station device.

In an embodiment, the node 203 is a user equipment.

In an embodiment, the node 203 is a relay device.

In an embodiment, the node 203 is a gateway device.

Typically, the UE 201 is a user equipment, and the node 203 is a base station device.

Typically, the UE 201 is a user equipment, and the node 203 is a user equipment.

Typically, the UE 201 is a base station device, and the node 203 is a base station device.

In an embodiment, the user equipment supports non-terrestrial network (Non-Terrestrial Network, NTN) transmission.

In an embodiment, the user equipment supports terrestrial network (Terrestrial Network, terrestrial network) transmission.

In an embodiment, the user equipment supports dual connection (Dual Connection, DC) transmission.

In an embodiment, the user equipment includes a flight vehicle.

In an embodiment, the user equipment includes a vehicle-mounted terminal.

In an embodiment, the user equipment includes a ship.

In an embodiment, the user equipment includes an Internet of things terminal.

In an embodiment, the user equipment includes an industrial Internet of things terminal.

In an embodiment, the user equipment includes a device that supports low-latency and high-reliability transmission.

In an embodiment, the user equipment includes a test device.

In an embodiment, the user equipment includes a signaling tester.

In an embodiment, the user equipment includes an IAB (Integrated Access and Backhaul)-MT (Mobile Termination, mobile termination).

In an embodiment, the base station device supports transmission in a non-terrestrial network.

In an embodiment, the base station device supports transmission in a terrestrial network.

In an embodiment, the base station device includes a base transceiver station (Base Transceiver Station, BTS).

In an embodiment, the base station device includes a NodeB (NodeB, NB).

In an embodiment, the base station device includes a gNB.

In an embodiment, the base station device includes an eNB.

In an embodiment, the base station device includes an ng-eNB.

In an embodiment, the base station device includes an en-gNB.

In an embodiment, the base station device includes a CU (Centralized Unit, centralized unit).

In an embodiment, the base station device includes a DU (Distributed Unit, distributed unit).

In an embodiment, the base station device includes a TRP (Transmitter Receiver Point, transmission reception node).

In an embodiment, the base station device includes a macro cellular (Marco Cellular) base station.

In an embodiment, the base station device includes a micro cell (Micro Cell) base station.

In an embodiment, the base station device includes a pico cell (Pico Cell) base station.

In an embodiment, the base station device includes a home base station (Femtocell).

In an embodiment, the base station device includes a flight platform device.

In an embodiment, the base station device includes a satellite device.

In an embodiment, the base station device includes a test device.

In an embodiment, the base station device includes a signaling tester.

In an embodiment, the base station device includes a gateway device.

In an embodiment, the base station device includes an IAB-node.

In an embodiment, the base station device includes an IAB-donor.

In an embodiment, the base station device includes an IAB-donor-CU.

In an embodiment, the base station device includes an IAB-donor-DU.

In an embodiment, the base station device includes an IAB-DU.

In an embodiment, the base station device includes an IAB-MT.

In an embodiment, the relay device includes a relay.

In an embodiment, the relay device includes an L3 relay.

In an embodiment, the relay device includes an L2 relay.

In an embodiment, the relay device includes a router.

In an embodiment, the relay device includes a switch.

In an embodiment, the relay device includes a gateway device.

In an embodiment, the relay device includes a user equipment.

In an embodiment, the relay device includes a base station device.

### Embodiment 3

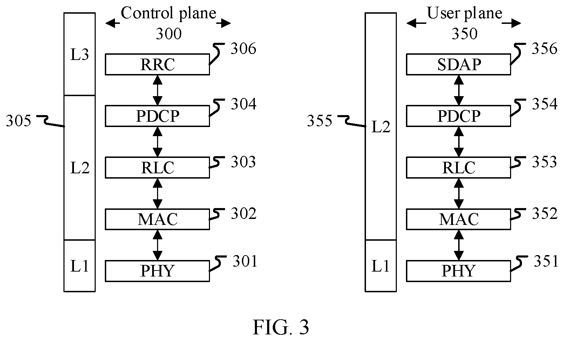

Embodiment 3 illustrates a schematic diagram of an embodiment of radio protocol architectures of a user plane and a control plane according to this application, as shown in FIG. 3. FIG. 3 is a schematic diagram illustrating an embodiment of radio protocol architectures used for a user plane 350 and a control plane 300, and FIG. 3 shows the radio protocol architecture used for the control plane 300 with three layers: a layer 1, a layer 2, and a layer 3. The layer 1 (L1 layer) is a lowest layer and implements various PHY (physical layer) signal processing functions. The L1 layer is referred to as a PHY 301 herein. The layer 2 (L2 layer) 305 is above the PHY 301 and includes a MAC (Medium Access Control, medium access control) sublayer 302, an RLC (Radio Link Control, radio link layer control protocol) sublayer 303, and a PDCP (Packet Data Convergence Protocol, packet data convergence protocol) sublayer 304. The PDCP sublayer 304 provides multiplexing between different radio bearers and logical channels. The PDCP sublayer 304 also provides security by encrypting a data packet, and provides inter-cell mobility support. The RLC sublayer 303 provides segmentation and reassembly of an upper layer data packet, retransmission of a lost data packet, and reordering of data packets to compensate for out-of-order receiving due to a HARQ (Hybrid Automatic Repeat Request, hybrid automatic repeat request). The MAC sublayer 302 provides multiplexing between logical and transmission channels. The MAC sublayer 302 is also responsible for allocating various radio resources (for example, resource blocks) in a cell. The MAC sublayer 302 is further responsible for an HARQ operation. An RRC (Radio Resource Control, radio resource control) sublayer 306 at the layer 3 (L3 layer) of the control plane 300 is responsible for obtaining a radio resource (for example, a radio bearer) and configuring a lower layer using RRC signaling. A radio protocol architecture of the user plane 350 includes a layer 1 (L1 layer) and a layer 2 (L2 layer). In the user plane 350, the radio protocol architecture is substantially the same as corresponding layers and sublayers in the control plane 300 with respect to a physical layer 351, a PDCP sublayer 354 of an L2 layer 355, an RLC sublayer 353 of the L2 layer 355, and a MAC sublayer 352 of the L2 layer 355, even though the PDCP sublayer 354 further provides header compression for an upper layer data packet to reduce radio transmission overheads. The L2 layer 355 in the user plane 350 further includes an SDAP (Service Data Adaptation Protocol, service data adaptation protocol) sublayer 356. The SDAP sublayer 356 is responsible for mapping between a QoS flow and a data radio bearer (DRB, Data Radio Bearer) to support service diversity.

In an embodiment, the radio protocol architecture in FIG. 3 is applicable to the first node in this application.

In an embodiment, the radio protocol architecture in FIG. 3 is applicable to the second node in this application.

In an embodiment, the radio protocol architecture in FIG. 3 is applicable to the third node in this application.

In an embodiment, the first RRC message in this application is generated at the RRC 306.

In an embodiment, the first signaling in this application is generated at the MAC 302 or the MAC 352.

In an embodiment, the first signaling in this application is generated at the PHY 301 or the PHY 351.

In an embodiment, the second signaling in this application is generated at the RRC 306.

In an embodiment, the second signaling in this application is generated at the MAC 302 or the MAC 352.

In an embodiment, the second signaling in this application is generated at the PHY 301 or the PHY 351.

In an embodiment, the third signaling in this application is generated at the RRC 306.

In an embodiment, the third signaling in this application is generated at the MAC 302 or the MAC 352.

In an embodiment, the third signaling in this application is generated at the PHY 301 or the PHY 351.

In an embodiment, the first Preamble in this application is generated at the MAC 302 or the MAC 352.

In an embodiment, the first Preamble in this application is generated at the PHY 301 or the PHY 351.

### Embodiment 4

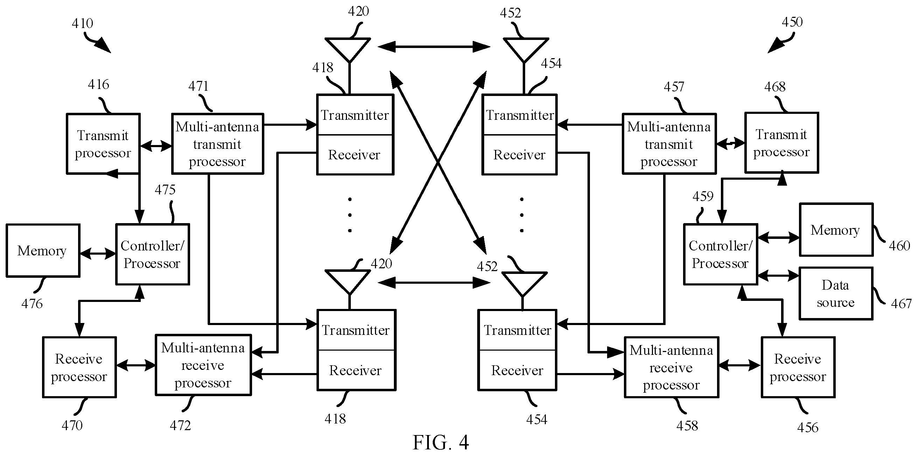

Embodiment 4 illustrates a schematic diagram of a first communication device and a second communication device according to this application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

During transmission from the second communication device 410 to the first communication device 450, at the second communication device 410, an upper layer data packet from a core network is provided to the controller/processor 475. The controller/processor 475 implements a function of an L2 layer. During transmission from the second communication device 410 to the first communication device 450, the controller/processor 475 provides header compression, encryption, packet segmentation and reordering, multiplexing between logical and transport channels, and allocation of radio resources of the first communication device 450 based on various priority metrics. The controller/processor 475 is further responsible for retransmission of a lost packet, and signaling to the first communication device 450. The transmit processor 416 and the multi-antenna transmit processor 471 implement various signal processing functions of an L1 layer (namely, a physical layer). The transmit processor 416 implements encoding and interleaving to facilitate forward error correction (FEC) at the second communication device 410, and mapping of signal clusters based on various modulation schemes (such as binary phase shift keying (BPSK), quadrature phase shift keying (QPSK), M-ary phase shift keying (M-PSK), and M-ary quadrature amplitude modulation (M-QAM)). The multi-antenna transmit processor 471 performs digital space precoding, including codebook-based precoding and non-codebook-based precoding, on an encoded and modulated symbol, and beamforming processing, to generate one or more spatial streams. The transmit processor 416 then maps each spatial stream to a subcarrier, multiplexes the mapped spatial stream with a reference signal (for example, a pilot) in time domain and/or frequency domain, and then uses inverse fast Fourier transform (IFFT) to generate a physical channel that carries a time-domain multicarrier symbol stream. Subsequently, the multi-antenna transmit processor 471 performs an operation of analog precoding sending/beamforming on the time-domain multicarrier symbol stream. Each transmitter 418 converts a baseband multicarrier symbol stream provided by the multi-antenna transmit processor 471 into a radio frequency stream, and then provides the radio frequency stream to different antennas 420.

During transmission from the second communication device 410 to the first communication device 450, at the first communication device 450, each receiver 454 receives a signal through a corresponding antenna 452 of the receiver. Each receiver 454 recovers information modulated onto a radio frequency carrier, converts a radio frequency stream into a baseband multicarrier symbol stream, and provides the baseband multicarrier symbol stream to the receive processor 456. The receive processor 456 and the multi-antenna receive processor 458 implement various signal processing functions of the L1 layer. The multi-antenna receive processor 458 performs an operation of analog precoding receiving/beamforming on the baseband multicarrier symbol stream from the receiver 454. The receive processor 456 converts, from time domain to frequency domain via fast Fourier transform (FFT), the baseband multicarrier symbol stream obtained after the operation of analog precoding receiving/beamforming. In frequency domain, a physical-layer data signal and a reference signal are demultiplexed by the receive processor 456. The reference signal is used for channel estimation; and the data signal is recovered after multi-antenna detection performed by the multi-antenna receive processor 458, to obtain any spatial stream that uses the first communication device 450 as a destination. A symbol on each spatial stream is demodulated and recovered in the receive processor 456, and a soft decision is generated. The receive processor 456 then decodes and de-interleaves the soft decision to recover upper layer data and a control signal transmitted by the second communication device 410 on a physical channel. The upper layer data and the control signal are then provided to the controller/processor 459. The controller/processor 459 implements functions of the L2 layer. The controller/processor 459 may be associated with the memory 460 that stores program code and data. The memory 460 may be referred to as a computer-readable medium. During transmission from the second communication device 410 to the first communication device 450, the controller/processor 459 provides demultiplexing between transport and logical channels, packet reassembly, decryption, header decompression, and control signal processing, to recover the upper layer data packet from the core network. The upper layer data packet is then provided to all protocol layers above the L2 layer. Various control signals may also be provided to an L3 for processing by the L3.

During transmission from the first communication device 450 to the second communication device 410, at the first communication device 450, the upper layer data packet is provided to the controller/processor 459 by using the data source 467. The data source 467 represents all protocol layers above the L2 layer. Similar to the sending function, at the second communication device 410, described during transmission from the second communication device 410 to the first communication device 450, the controller/processor 459 implements header compression, encryption, packet segmentation and reordering, and multiplexing between logical and transport channels based on radio resource allocation, to implement the functions of the L2 layer for the user plane and the control plane. The controller/processor 459 is further responsible for retransmission of a lost packet, and signaling to the second communication device 410. The transmit processor 468 performs modulation mapping and channel encoding processing, and the multi-antenna transmit processor 457 performs digital multi-antenna spatial precoding, including codebook-based precoding and non-codebook-based precoding, and beamforming processing. Then the transmit processor 468 modulates a generated spatial stream into a multicarrier/single-carrier symbol stream, and the multicarrier/single-carrier symbol stream is provided to different antennas 452 by using the transmitter 454 after undergoing an analog precoding/beamforming operation in the multi-antenna transmit processor 457. Each transmitter 454 first converts a baseband symbol stream provided by the multi-antenna transmit processor 457 into a radio frequency symbol stream, and then provides the radio frequency symbol stream to the antenna 452.

During transmission from the first communication device 450 to the second communication device 410, a function at the second communication device 410 is similar to the receiving function, at the first communication device 450, described during transmission from the second communication device 410 to the first communication device 450. Each receiver 418 receives a radio frequency signal through a corresponding antenna 420 of the receiver, converts the received radio frequency signal into a baseband signal, and provides the baseband signal to the multi-antenna receive processor 472 and the receive processor 470. The receive processor 470 and the multi-antenna receive processor 472 jointly implement the function of the L1 layer. The controller/processor 475 implements the functions of the L2 layer. The controller/processor 475 may be associated with the memory 476 that stores program code and data. The memory 476 may be referred to as a computer-readable medium. During transmission from the first communication device 450 to the second communication device 410, the controller/processor 475 provides demultiplexing between transport and logical channels, packet reassembly, decryption, header decompression, and control signal processing, to recover an upper layer data packet from the UE 450. The upper layer data packet from the controller/processor 475 may be provided to the core network.

In an embodiment, the first communication device 450 includes at least one processor and at least one memory. The at least one memory includes computer program code, and the at least one memory and the computer program code are configured to be used with the at least one processor. The first communication device 450 at least: receives a first RRC message, where the first RRC message includes a first condition and a target configuration of the first candidate cell, and the first condition is a condition under which the target configuration of the first candidate cell is applied; and initiates a first process, where the first process includes initiating random access on the first candidate cell, and initiating a first process depends on at least one of measurement or a first timer not running; or the first process includes starting UE-based timing advance measurement, and initiating a first process depends on at least the former of the measurement and the first timer not running. The first process is for early uplink synchronization for the first candidate cell.

In an embodiment, the first communication device 450 includes a memory storing a computer-readable instruction program. The computer-readable instruction program generates actions when being executed by at least one processor. The actions include: receiving a first RRC message, where the first RRC message includes a first condition and a target configuration of the first candidate cell, and the first condition is a condition under which the target configuration of the first candidate cell is applied; and initiating a first process, where the first process includes initiating random access on the first candidate cell, and initiating a first process depends on at least one of measurement or a first timer not running; or the first process includes starting UE-based timing advance measurement, and initiating a first process depends on at least the former of the measurement and the first timer not running. The first process is for early uplink synchronization for the first candidate cell.

In an embodiment, the second communication device 410 includes at least one processor and at least one memory, the at least one memory includes computer program code, and the at least one memory and the computer program code are configured to be used with the at least one processor. The second communication device 410 at least: sends a first RRC message, where the first RRC message includes a first condition and a target configuration of the first candidate cell, and the first condition is a condition under which the target configuration of the first candidate cell is applied. A receiving party of the first RRC message initiates a first process, where the first process includes initiating random access on the first candidate cell, and initiating a first process depends on at least one of measurement or a first timer not running; or the first process includes starting UE-based timing advance measurement, and initiating a first process depends on at least the former of the measurement and the first timer not running. The first process is for early uplink synchronization for the first candidate cell.

In an embodiment, the second communication device 410 includes a memory storing a computer-readable instruction program. The computer-readable instruction program generates actions when being executed by at least one processor. The actions include: sending a first RRC message, where the first RRC message includes a first condition and a target configuration of the first candidate cell, and the first condition is a condition under which the target configuration of the first candidate cell is applied. A receiving party of the first RRC message initiates a first process, where the first process includes initiating random access on the first candidate cell, and initiating a first process depends on at least one of measurement or a first timer not running; or the first process includes starting UE-based timing advance measurement, and initiating a first process depends on at least the former of the measurement and the first timer not running. The first process is for early uplink synchronization for the first candidate cell.

In an embodiment, at least one of the antenna 452, the receiver 454, the receive processor 456, and the controller/processor 459 is used to receive the first RRC message.

In an embodiment, at least one of the antenna 420, the transmitter 418, the transmit processor 416, and the controller/processor 475 is used to send the first RRC message.

In an embodiment, at least one of the antenna 452, the receiver 454, the receive processor 456, and the controller/processor 459 is used to receive the first signaling.

In an embodiment, at least one of the antenna 420, the transmitter 418, the transmit processor 416, and the controller/processor 475 is used to send the first signaling.

In an embodiment, at least one of the antenna 452, the transmitter 454, the transmit processor 468, and the controller/processor 459 is used to send the second signaling.

In an embodiment, at least one of the antenna 420, the receiver 418, the receive processor 470, and the controller/processor 475 is used to receive the second signaling.

In an embodiment, at least one of the antenna 452, the receiver 454, the receive processor 456, and the controller/processor 459 is used to receive the third signaling.

In an embodiment, at least one of the antenna 420, the transmitter 418, the transmit processor 416, and the controller/processor 475 is used to send the third signaling.

In an embodiment, at least one of the antenna 452, the transmitter 454, the transmit processor 468, and the controller/processor 459 is used to send the first Preamble.

In an embodiment, at least one of the antenna 420, the receiver 418, the receive processor 470, and the controller/processor 475 is used to receive the first Preamble.

In an embodiment, the first communication device 450 corresponds to the first node in this application.

In an embodiment, the second communication device 410 corresponds to the second node in this application.

In an embodiment, the first communication device 450 is a user equipment.

In an embodiment, the first communication device 450 is a base station device.

In an embodiment, the first communication device 450 is a relay device.

In an embodiment, the second communication device 410 is a user equipment.

In an embodiment, the second communication device 410 is a base station device.

In an embodiment, the second communication device 410 is a relay device.

In an embodiment, the third communication device 410 is a user equipment.

In an embodiment, the third communication device 410 is a base station device.

In an embodiment, the third communication device 410 is a relay device.

### Embodiment 5

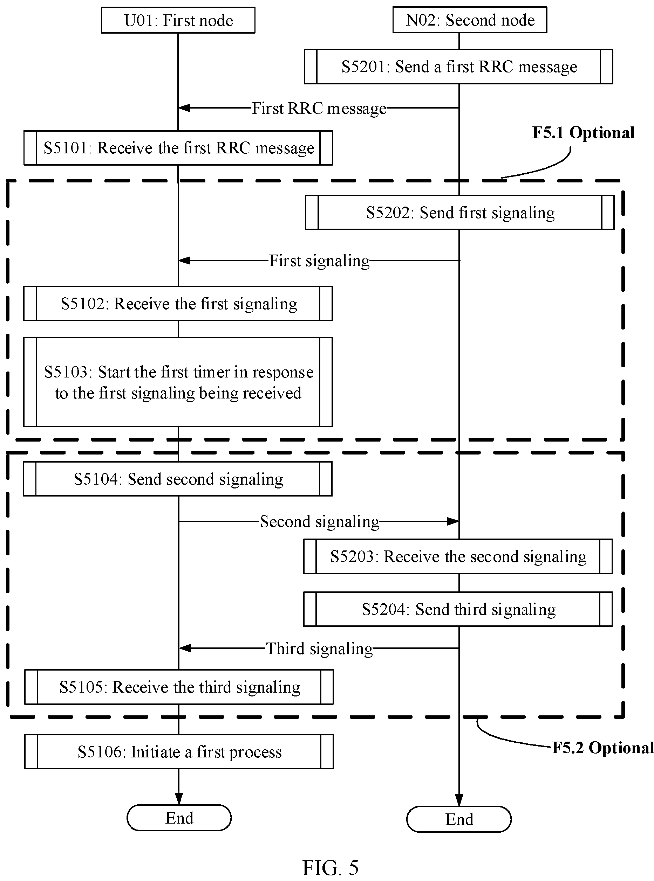

Embodiment 5 illustrates a flowchart of transmission of a wireless signal according to an embodiment of this application, as shown in FIG. 5. It should be particularly noted that an order in this example does not limit an order of signal transmission and an order of implementation in this application.

A first node U01,
receives a first RRC message in step S5101;
receives first signaling in step S5102;
in step S5103, starts the first timer in response to the first signaling being received;
sends second signaling in step S5104;
receives third signaling in step S5105; and
initiates a first process in step S5106.

A second node N02,
sends the first RRC message in step S5201;
sends the first signaling in step S5202;
receives the second signaling in step S5203; and
sends the third signaling in step S5204.

In Embodiment 5, the first RRC message includes a first condition and a target configuration of the first candidate cell, and the first condition is a condition under which the target configuration of the first candidate cell is applied. Initiating a first process depends on at least one of measurement or a first timer not running, and the first process is for early uplink synchronization for the first candidate cell. The first signaling indicates a timing advance amount of the first candidate cell, the second signaling triggers the third signaling, and the third signaling triggers initiation of random access on the first candidate cell.

In an embodiment, the first node U01 and the second node N02 are connected in a wireless manner.

In an embodiment, the first node U01 and the second node N02 are connected in a wired manner.

In an embodiment, the first node U01 and the second node N02 are connected through a Uu interface.

In an embodiment, the first node U01 and the second node N02 are connected through an IAB interface.

In an embodiment, the first node U01 and the second node N02 are connected through a PC5 interface.

In an embodiment, a dashed-line box F5.1 is optional.

In an embodiment, the dashed-line box F5.1 exists.

In an embodiment, the dashed-line box F5.1 does not exist.

In an embodiment, a dashed-line box F5.2 is optional.

In an embodiment, the dashed-line box F5.2 exists.

In an embodiment, the dashed-line box F5.2 does not exist.

In an embodiment, the dashed-line box F5.1 is before the dashed-line box F5.2.

In an embodiment, the dashed-line box F5.2 is before the dashed-line box F5.1.

In an embodiment, an order of the dashed-line box F5.2 and the dashed-line box F5.1 is not fixed.

In an embodiment, the dashed-line box F5.2 and the dashed-line box F5.1 are independent of each other.

In an embodiment, the first signaling includes a Timing Advance Command field, and the Timing Advance Command field indicates the timing advance amount of the first candidate cell.

In an embodiment, the first signaling is a Timing Advance Command MAC CE.

In an embodiment, the first signaling is an Absolute Timing Advance Command MAC CE.

In an embodiment, a PDCCH for transmitting the first signaling is scrambled by a C-RNTI of the first node in the first serving cell.

In an embodiment, the first signaling is a MAC RAR.

In an embodiment, the first signaling is a fallbackRAR.

In an embodiment, the first signaling is a MAC PDU.

In an embodiment, the first signaling includes a MAC subheader.

In an embodiment, the MAC subheader includes a RAPID of the first Preamble sent by the first node.

In an embodiment, a PDCCH for transmitting the first signaling is scrambled by an RA-RNTI of the first Preamble sent by the first node.

In an embodiment, the first signaling is DCI.

In an embodiment, the first signaling includes one Timing Advance Command field and one identifier field, where the Timing Advance Command field indicates the timing advance amount of the first candidate cell, and the identifier field indicates an identifier of the first candidate cell.

In an embodiment, the identifier field indicates an index of the first candidate cell.

In an embodiment, the identifier field indicates an index-1 of the first candidate cell.

In an embodiment, the first RRC message includes an index of the first candidate cell.

In an embodiment, the first signaling includes one or more Timing Advance Command fields and one or more identifier fields. The one or more Timing Advance Command fields and the one or more identifier fields are equal in quantity and are in one-to-one correspondence. The one identifier field is one of the one or more identifier fields, and the one Timing Advance Command field is one of the one or more Timing Advance Command fields.

In an embodiment, the configuration information of the first candidate cell includes an index of the first candidate cell.

In an embodiment, the index of the first candidate cell depends on the target configuration.

In an embodiment, the first signaling is received in the first process.

In an embodiment, the first process is not in progress when the first signaling is received.

In an embodiment, the first signaling is received in the random access initiated on the first candidate cell.

In an embodiment, the random access initiated on the first candidate cell is not in progress when the first signaling is received.

In an embodiment, the random access initiated on the first candidate cell includes sending a first Preamble, where the first Preamble triggers the first signaling.

In an embodiment, the random access initiated on the first candidate cell includes sending a first Preamble; and after the first Preamble is sent, the first signaling is received.

In an embodiment, in response to sending the first Preamble, a second timer is started.

In a sub-embodiment of the foregoing embodiment, the second timer is a ra-ResponseWindow.

In a sub-embodiment of the foregoing embodiment, the second timer is an RAR window.

In a sub-embodiment of the foregoing embodiment, the second timer is a random access response window.

In a sub-embodiment of the foregoing embodiment, in response to the second timer being at expiry, the first Preamble is re-sent.

In a sub-embodiment of the foregoing embodiment, the first signaling is monitored while the second timer is running.

In a sub-embodiment of the foregoing embodiment, the first signaling is received when the second timer is running.

In an embodiment, the first signaling is received on the first serving cell.

In a sub-embodiment of the foregoing embodiment, the first node descrambles the first signaling on the first serving cell using a C-RNTI of the first node.

In a sub-embodiment of the foregoing embodiment, the first node descrambles the first signaling on the first serving cell using an RA-RNTI of the first Preamble.

In a sub-embodiment of the foregoing embodiment, the first node determines a MAC subheader of the first signaling based on a RAPID of the first Preamble, and further determines a payload of the first signaling.

In an embodiment, the first signaling is received on the first candidate cell.

In a sub-embodiment of the foregoing embodiment, the first node descrambles the first signaling on the first candidate cell using an RA-RNTI of the first Preamble.

In a sub-embodiment of the foregoing embodiment, the first node determines a MAC subheader of the first signaling based on a RAPID of the first Preamble, and further determines a payload of the first signaling.

In an embodiment, the first signaling includes one or more sub-PDUs, which include a first sub-PDU. The first sub-PDU carries the timing advance amount of the first candidate cell. The first node determines the first sub-PDU based on a RAPID of the first Preamble.

In an embodiment, the first Preamble is sent on the first candidate cell; and in response to sending the first Preamble, the first signaling is received on the first serving cell, where the first signaling indicates the timing advance amount of the first candidate cell.

In an embodiment, the first Preamble is sent on the first candidate cell; and in response to sending the first Preamble, the first signaling is received on the first candidate cell, where the first signaling indicates the timing advance amount of the first candidate cell.

In an embodiment, the first timer is a timeAlignmentTimer for the first candidate cell.

In an embodiment, the first timer controls whether an uplink of the first candidate cell is aligned.

In an embodiment, when the first timer is running, it is considered that uplink timing advance of the first candidate cell valid.

In an embodiment, when the first timer is not running, it is considered that uplink synchronization with the first candidate cell is out of step.

In an embodiment, a first receiver receives a first RRC message, where the first RRC message includes configuration information of a first candidate cell, the first candidate cell is a candidate of a first serving cell, the configuration information of the first candidate cell includes a target configuration and a first condition, and the first condition is a condition under which the target configuration is applied. A first processor sends second signaling and receives third signaling, and initiates random access on the first candidate cell, where the sending second signaling depends on at least one of measurement or a first timer not running. The first process is for early uplink synchronization for the first candidate cell. The first process includes initiating random access on the first candidate cell, and the first process includes sending second signaling and receiving third signaling. The second signaling triggers the third signaling, and the third signaling triggers initiation of random access on the first candidate cell.

In an embodiment, the second signaling is UCI.

In an embodiment, the second signaling is a MAC CE.

In an embodiment, the second signaling is an RRC message.

In an embodiment, the third signaling includes an index of the first candidate cell.

In an embodiment, the third signaling is DCI.

In an embodiment, the third signaling is format 1_0 DCI.

In an embodiment, the third signaling is a PDCCH order.

In an embodiment, the third signaling is an RRC message.

In an embodiment, in response to sending the second signaling, the third signaling is received.

In an embodiment, in response to receiving the third signaling, random access is initiated on the first candidate cell.

In an embodiment, the second signaling is a PRACH resource request.

In an embodiment, the second signaling includes a measurement result for the first candidate cell.

In an embodiment, the measurement result for the first candidate cell refers to an L1 measurement result.

In an embodiment, the measurement result for the first candidate cell refers to an L3 measurement result.

In an embodiment, the second signaling indicates one or more reference signals with best signal quality of the first candidate cell.

In a sub-embodiment of the foregoing embodiment, the best signal quality refers to maximum downlink received RSRP.

In a sub-embodiment of the foregoing embodiment, the best signal quality refers to maximum downlink received RSRQ.

In a sub-embodiment of the foregoing embodiment, the best signal quality refers to a maximum downlink received SINR.

In a sub-embodiment of the foregoing embodiment, a quantity of reference signals of the first candidate cell indicated by the second signaling is pre-configured.

In a sub-embodiment of the foregoing embodiment, a quantity of reference signals of the first candidate cell indicated by the second signaling is configured by the first RRC message.

In an embodiment, the third signaling configures the random access initiated on the first candidate cell.

In an embodiment, the third signaling indicates a type of the random access.

In an embodiment, the third signaling indicates whether the random access is CBRA or CFRA.

In an embodiment, the third signaling configures a CFRA resource of the random access initiated on the first candidate cell.

In an embodiment, the third signaling indicates a random access Preamble index of the random access.

In a sub-embodiment of the foregoing embodiment, the random access Preamble index is a single Preamble index, where a value of the single Preamble index may be 0b000000.

In a sub-embodiment of the foregoing embodiment, the random access Preamble index is a single Preamble index, where a value of the single Preamble index is not 0b000000.

In a sub-embodiment of the foregoing embodiment, the random access Preamble index is one or more Preamble indexes, where a value of any one of the one or more Preamble indexes is not 0b000000.

In an embodiment, the third signaling indicates an SSB resource index of the random access.

In a sub-embodiment of the foregoing embodiment, the SSB resource index is an SSB index.

In a sub-embodiment of the foregoing embodiment, the SSB resource index is one or more SSB indexes.

In a sub-embodiment of the foregoing embodiment, the SSB resource index is an SSB index set.

In an embodiment, the third signaling indicates a PRACH mask index of the random access.

In an embodiment, the third signaling indicates an index of the first candidate cell.

In an embodiment, the third signaling indicates a CFRA resource of the random access initiated on the first candidate cell.

In a sub-embodiment of the foregoing embodiment, the CFRA resource is one or more CFRA-SSB-Resource subfields.

In a sub-embodiment of the foregoing embodiment, each CFRA-SSB-Resource subfield includes an SSB index and a random access Preamble index.

In an embodiment, the third signaling configures a period for performing the random access on the first candidate cell.

In an embodiment, the third signaling configures a validity period of a CFRA resource on the first candidate cell.

In an embodiment, in response to receiving the third signaling, a third timer is started or restarted.

In an embodiment, in response to the third timer being at expiry, the CFRA resource configured by the third signaling is released.

In an embodiment, when the random access on the first candidate cell is completed, the CFRA resource configured by the third signaling is released.

In an embodiment, when the first condition is satisfied, the CFRA resource configured by the third signaling is released.

In an embodiment, when the target configuration is successfully applied, the CFRA resource configured by the third signaling is released.

In an embodiment, when it is determined that first uplink transmission to the first candidate cell is successfully received, the CFRA resource configured by the third signaling is released.

In an embodiment, in response to initiating the first process, the second signaling is sent.

In an embodiment, the second signaling is sent in response to a measurement result for the first candidate cell satisfying the first threshold.

In an embodiment, the second signaling is sent in response to a measurement result for the first serving cell satisfying the third threshold.

In an embodiment, the second signaling is sent in response to a measurement result for the first candidate cell satisfying the first threshold and a measurement result for the first serving cell satisfying the third threshold.

In an embodiment, when a measurement result for the first candidate cell satisfies the first threshold, the second signaling is sent if there is no corresponding valid CFRA resource on the first candidate cell; otherwise, the first process is initiated.

In an embodiment, when a measurement result for the first serving cell satisfies the third threshold, the second signaling is sent if there is no corresponding valid CFRA resource on the first candidate cell; otherwise, the first process is initiated.

In an embodiment, when a measurement result for the first candidate cell satisfies the first threshold and a measurement result for the first serving cell satisfies the third threshold, the second signaling is sent if there is no corresponding valid CFRA resource on the first candidate cell; otherwise, the first process is initiated.

In an embodiment, when the first timer is not running and a measurement result for the first candidate cell satisfies the first threshold, the second signaling is sent if there is no corresponding valid CFRA resource on the first candidate cell; otherwise, the first process is initiated.

In an embodiment, when the first timer is not running and a measurement result for the first serving cell satisfies the third threshold, the second signaling is sent if there is no corresponding valid CFRA resource on the first candidate cell; otherwise, the first process is initiated.

In an embodiment, when the first timer is not running and a measurement result for the first candidate cell satisfies the first threshold and a measurement result for the first serving cell satisfies the third threshold, the second signaling is sent if there is no corresponding valid CFRA resource on the first candidate cell; otherwise, the first process is initiated.

In an embodiment, the corresponding valid CFRA resource means: An SSB index in a CFRA resource is equal to or quasi co-located with a reference signal in the measurement result for the first candidate cell, and a measurement result for the reference signal satisfies the first threshold.

In an embodiment, the corresponding valid CFRA resource means: A measurement result for a reference signal that is of the first candidate cell and that corresponds to an SSB index in a CFRA resource satisfies a threshold.

In a sub-embodiment of the foregoing embodiment, the reference signal of the first candidate cell is an SSB.

In a sub-embodiment of the foregoing embodiment, the threshold has a default value.

In a sub-embodiment of the foregoing embodiment, the threshold is pre-configured.

In a sub-embodiment of the foregoing embodiment, the threshold is configured by the first RRC message.

In an embodiment, when the first timer is not running and the first condition is satisfied, the second signaling is sent if there is no corresponding valid CFRA resource on the first candidate cell; otherwise, LTM cell handover to the first candidate cell is performed.

In a sub-embodiment of the foregoing embodiment, the LTM cell handover refers to conditional LTM cell handover.

In a sub-embodiment of the foregoing embodiment, the second signaling includes an indication indicating that the first condition is satisfied.

In a sub-embodiment of the foregoing embodiment, in response to sending the second signaling, the third signaling is received.

In a sub-embodiment of the foregoing embodiment, the third signaling is an LTM Cell Switch Command MAC CE.

In a sub-embodiment of the foregoing embodiment, the third signaling indicates the first node to hand over from the LTM cell to the first candidate cell.

In an embodiment, when the first timer is running and the first condition is satisfied, conditional LTM cell handover to the first candidate cell is performed.

In an embodiment, a first receiver receives a first RRC message, where the first RRC message includes configuration information of a first candidate cell, the first candidate cell is a candidate of a first serving cell, the configuration information of the first candidate cell includes a target configuration and a first condition, and the first condition is a condition under which the target configuration is applied. A first processor sends second signaling and receives third signaling, and initiates random access on the first candidate cell, where the sending second signaling depends on at least one of measurement or a first timer not running. The first process includes initiating random access on the first candidate cell, and the first process includes sending second signaling and receiving third signaling. The second signaling triggers the third signaling, and the third signaling triggers initiation of random access on the first candidate cell.

In a sub-embodiment of the foregoing embodiment, the first process is an LTM cell handover for the first candidate cell.

In a sub-embodiment of the foregoing embodiment, the second signaling includes a measurement result for the first candidate cell.

In a sub-embodiment of the foregoing embodiment, the second signaling includes a measurement result for the first serving cell.

In a sub-embodiment of the foregoing embodiment, the third signaling includes a fallback indication.

In a sub-embodiment of the foregoing sub-embodiment, the fallback indication indicates the first node to fall back from early uplink synchronization for an LTM cell of the first candidate cell to a RACH-based LTM cell handover.

In a sub-embodiment of the foregoing sub-embodiment, the fallback indication indicates the first node to fall back from a conditional LTM cell handover to the first candidate cell to an LTM cell handover.

In a sub-embodiment of the foregoing sub-embodiment, the fallback indication indicates the first node to fall back from a conditional LTM cell handover to the first candidate cell to an LTM cell handover, and the third signaling is a handover command for the LTM cell handover.

In a sub-embodiment of the foregoing embodiment, the third signaling includes a CFRA resource on the first candidate cell.

In a sub-embodiment of the foregoing embodiment, the third signaling indicates the first node to perform CBRA on the first candidate cell.

In a sub-embodiment of the foregoing embodiment, the third signaling indicates the first node to perform early uplink synchronization on the first candidate cell.

In a sub-embodiment of the foregoing embodiment, the third signaling indicates the first node to perform an LTM cell handover on the first candidate cell.

In a sub-embodiment of the foregoing embodiment, the third signaling indicates the first node to perform UE-based uplink timing advance measurement on the first candidate cell.

In a sub-embodiment of the foregoing embodiment, the third signaling includes a first field.

In a sub-embodiment of the foregoing sub-embodiment, the first field indicates a function of the CFRA resource in the first signaling.

In a sub-embodiment of the foregoing sub-embodiment, the first field indicates that the CFRA resource in the first signaling is used for early uplink synchronization.

In a sub-embodiment of the foregoing sub-embodiment, the first field indicates that the CFRA resource in the first signaling is used for a RACH-based LTM cell handover.

In a sub-embodiment of the foregoing sub-embodiment, the first field indicates the first node to perform early uplink synchronization on the first candidate cell.

In a sub-embodiment of the foregoing sub-embodiment, the first field indicates the first node to perform an LTM cell handover on the first candidate cell.

In a sub-embodiment of the foregoing sub-embodiment, the first field indicates the first node to perform UE-based uplink timing advance measurement on the first candidate cell.

### Embodiment 6

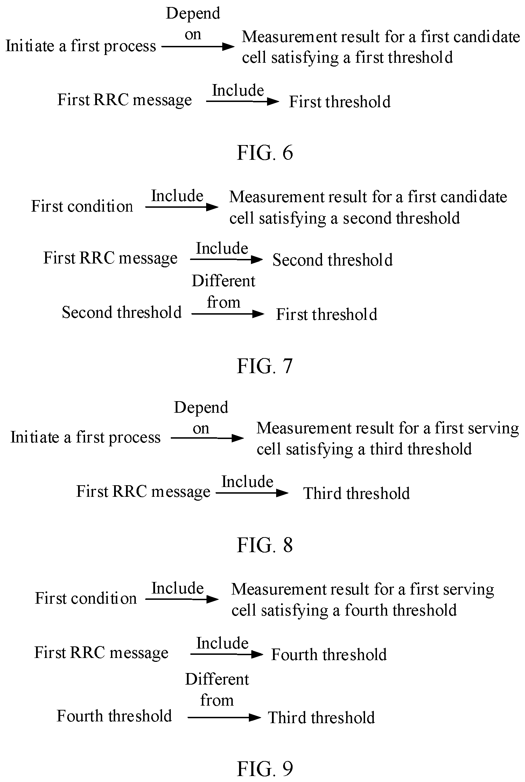

Embodiment 6 illustrates a schematic diagram of a first threshold according to an embodiment of this application, as shown in FIG. 6.

In Embodiment 6, initiating a first process depends on a measurement result for the first candidate cell satisfying the first threshold, and the first RRC message includes the first threshold.

In an embodiment, initiating a first process depending on at least one of measurement or a first timer not running means: Initiating a first process depends on a measurement result for the first candidate cell satisfying the first threshold.

In an embodiment, when the first RRC message includes the first threshold, initiating a first process depends on a measurement result for the first candidate cell satisfying the first threshold.

In an embodiment, measurement for the first candidate cell is L1 measurement.

In an embodiment, measurement for the first candidate cell is L3 measurement.

In an embodiment, measurement for the first candidate cell includes L1 measurement.

In an embodiment, measurement for the first candidate cell includes L3 measurement.

In an embodiment, measurement for the first candidate cell includes SSB measurement.

In an embodiment, measurement for the first candidate cell includes CSI-RS measurement.

In an embodiment, measurement for the first candidate cell includes positioning.

In an embodiment, the first RRC message configures the measurement for the first candidate cell.

In an embodiment, the first RRC message configures the first threshold.

In an embodiment, the first RRC message configures a specified reference signal of the first candidate cell for measurement.

In an embodiment, the measurement result for the first candidate cell refers to a measurement result for the specified reference signal of the first candidate cell.

In an embodiment, the first RRC message configures one or more reference signals of the first candidate cell for measurement.

In an embodiment, the measurement result for the first candidate cell refers to a best one among measurement results for the one or more reference signals of the first candidate cell.

In an embodiment, the measurement result for the first candidate cell satisfying the first threshold means: An absolute value of a change in the measurement result for the first candidate cell is greater than or not less than the first threshold.

In an embodiment, the measurement result for the first candidate cell satisfying the first threshold means: A value of a change in the measurement result for the first candidate cell is greater than or not less than the first threshold.

In an embodiment, the change in the measurement result for the first candidate cell refers to: a change between a previous measurement result for the first candidate cell and a current measurement result for the first candidate cell.

In an embodiment, the change in the measurement result for the first candidate cell refers to: a difference between a previous measurement result for the first candidate cell and a current measurement result for the first candidate cell.

In an embodiment, the change in the measurement result for the first candidate cell refers to: a difference between a current measurement result for the first candidate cell and a previous measurement result for the first candidate cell.

In an embodiment, the change in the measurement result for the first candidate cell refers to: a difference between a current measurement result for the first candidate cell and a measurement result for the first candidate cell before the first RRC message is received.

In an embodiment, the measurement result for the first candidate cell satisfying the first threshold means: The measurement result for the first candidate cell is greater than or not less than the first threshold.

In an embodiment, the measurement result for the first candidate cell satisfying the first threshold means: The measurement result for the first candidate cell is better than or not worse than the first threshold.

In an embodiment, initiating a first process depending on the measurement result for the first candidate cell satisfying the first threshold refers to: initiating the first process in response to the measurement result for the first candidate cell satisfying the first threshold.

In an embodiment, initiating a first process depending on the measurement result for the first candidate cell satisfying the first threshold refers to: initiating the first process in response to the measurement result for the first candidate cell satisfying the first threshold.

In an embodiment, the first threshold is dedicated to early uplink synchronization.

In an embodiment, the first threshold is dedicated to UE-based timing advance measurement.

In an embodiment, the first threshold does not depend on the first condition.

In an embodiment, the first RRC message including the first threshold means: The first RRC message configures the configuration information of the first candidate cell, where the configuration information of the first candidate cell includes an ltm-EarlyUL-SyncConfig field or an ltm-EarlyUL-SyncConfigSUL field, and the ltm-EarlyUL-SyncConfig field or the ltm-EarlyUL-SyncConfigSUL field includes the first threshold.

In an embodiment, the first threshold depends on the first condition.

In a sub-embodiment of the foregoing embodiment, the first condition includes a second threshold, and the second threshold is used for evaluating a measurement result for the first candidate cell.

In a sub-embodiment of the foregoing embodiment, the first threshold is represented by an offset relative to the second threshold.

In a sub-embodiment of the foregoing embodiment, the offset is in units of dB.

In a sub-embodiment of the foregoing embodiment, the offset is a negative offset.

In a sub-embodiment of the foregoing embodiment, the first threshold is equal to a sum of the first threshold and the offset.

In a sub-embodiment of the foregoing embodiment, the first RRC message including the first threshold means: The first RRC message includes the second threshold, and the first threshold is represented by the offset of the first threshold relative to the second threshold.

In a sub-embodiment of the foregoing embodiment, the first RRC message including the first threshold means: The first RRC message configures the configuration information of the first candidate cell, the configuration information of the first candidate cell includes an ltm-EarlyUL-SyncConfig field or an ltm-EarlyUL-SyncConfigSUL field, and the ltm-EarlyUL-SyncConfig field or the ltm-EarlyUL-SyncConfigSUL field includes the offset.

In an embodiment, the measurement result for the first candidate cell satisfying the first threshold includes detecting that a location of the first node enters or belongs to a first area.

In a sub-embodiment of the foregoing embodiment, the first area is an area associated with the first candidate cell.

In a sub-embodiment of the foregoing embodiment, the first area is configured by the first RRC message.

### Embodiment 7

Embodiment 7 illustrates a schematic diagram of a second threshold according to an embodiment of this application, as shown in FIG. 7.

In Embodiment 7, the first condition includes a measurement result for the first candidate cell satisfying the second threshold, the first RRC message includes the second threshold, and the first threshold is different the second threshold.

In an embodiment, the first threshold depends on the first condition.

In an embodiment, the first condition depends on the first threshold.

In an embodiment, the first RRC message includes the first threshold and the second threshold.

In an embodiment, the configuration information of the first candidate cell includes the first threshold and the second threshold.

In an embodiment, the first condition is that the measurement result for the first candidate cell satisfies the second threshold.

In an embodiment, the measurement result for the first candidate cell is L1 measurement.

In an embodiment, initiating a first process depends on a measurement result for the first candidate cell satisfying the first threshold, and the first condition includes the measurement result for the first candidate cell satisfying the second threshold.

In an embodiment, the measurement result for the first candidate cell corresponding to the first threshold and the measurement result for the first candidate cell corresponding to the second threshold are measurement quantities of a same reference signal.

In a sub-embodiment of the foregoing embodiment, the measurement result for the first candidate cell corresponding to the first threshold and the measurement result for the first candidate cell corresponding to the second threshold each are measurement for an SSB of the first candidate cell.

In a sub-embodiment of the foregoing embodiment, the measurement result for the first candidate cell corresponding to the first threshold and the measurement result for the first candidate cell corresponding to the second threshold each are measurement for a CSI-RS of the first candidate cell.

In a sub-embodiment of the foregoing embodiment, the measurement result for the first candidate cell corresponding to the first threshold and the measurement result for the first candidate cell corresponding to the second threshold each are measurement for an SSB of the first candidate cell or each are measurement for a CSI-RS of the first candidate cell.

In a sub-embodiment of the foregoing embodiment, the measurement result for the first candidate cell corresponding to the first threshold and the measurement result for the first candidate cell corresponding to the second threshold are both a same measurement quantity of a same reference signal.

In a sub-embodiment of the foregoing sub-embodiment, the measurement result for the first candidate cell corresponding to the first threshold and the measurement result for the first candidate cell corresponding to the second threshold each are RSRP measurement for an SSB of the first candidate cell.

In a sub-embodiment of the foregoing sub-embodiment, the measurement result for the first candidate cell corresponding to the first threshold and the measurement result for the first candidate cell corresponding to the second threshold each are RSRQ measurement for an SSB of the first candidate cell.

In an embodiment, the first RRC message including the second threshold means: The first RRC message includes a condExecutionCond field, and the condExecutionCond field includes the second threshold.

In a sub-embodiment of the foregoing embodiment, the condExecutionCond field is the first condition.

In a sub-embodiment of the foregoing embodiment, the first RRC message includes a condRRCReconfig field, and the condRRCReconfig field includes the configuration information of the first candidate cell.

In an embodiment, the first RRC message including the second threshold means: The first RRC message includes a condExecutionCondLTM field, and the condExecutionCondLTM field includes the second threshold.

In a sub-embodiment of the foregoing embodiment, the condExecutionCondLTM field is the first condition.

In a sub-embodiment of the foregoing embodiment, the first RRC message includes an LTMcondRRCReconfig field, and the LTMcondRRCReconfig field includes the configuration information of the first candidate cell.

In an embodiment, the first threshold being different from the second threshold means: The measurement result for the first candidate cell corresponding to the first threshold and the measurement result for the first candidate cell corresponding to the second threshold are both a same measurement quantity of a same reference signal; and the values of the first threshold and the second threshold are different.

In a sub-embodiment of the foregoing embodiment, the first threshold depends on a first offset and the second threshold.

In a sub-embodiment of the foregoing embodiment, the first threshold is equal to a sum of the second threshold and the first offset.

In a sub-embodiment of the foregoing embodiment, the first offset is not equal to 0.

In a sub-embodiment of the foregoing embodiment, the first offset is less than 0 or not greater than 0.

In a sub-embodiment of the foregoing embodiment, the first offset is configured by the first RRC message.

In a sub-embodiment of the foregoing embodiment, the first threshold is less than the second threshold.

In a sub-embodiment of the foregoing embodiment, the condition that the measurement result for the first candidate cell satisfies the first threshold is looser than the condition that the measurement result for the first candidate cell satisfies the second threshold.

In a sub-embodiment of the foregoing embodiment, when the measurement result for the first candidate cell satisfies the second threshold, the measurement result must also satisfy the first threshold.

In a sub-embodiment of the foregoing embodiment, when the measurement result for the first candidate cell satisfies the first threshold, the measurement result does not necessarily satisfy the second threshold.

In an embodiment, initiating a first process depends on the measurement result for the first candidate cell satisfying the first threshold; the first RRC message includes the first threshold; and the first condition includes the measurement result for the first candidate cell satisfying the second threshold, and the first condition includes a measurement result for the first serving cell satisfying a fourth threshold.

In a sub-embodiment of the foregoing embodiment, the fourth threshold is configured by the first RRC message.

In a sub-embodiment of the foregoing embodiment, the measurement result for the first candidate cell corresponding to the fourth threshold is L1 measurement.

### Embodiment 8

Embodiment 8 illustrates a schematic diagram of a third threshold according to an embodiment of this application, as shown in FIG. 8.

In Embodiment 8, initiating a first process depends on a measurement result for the first serving cell satisfying the third threshold, and the first RRC message includes the third threshold.

In an embodiment, the measurement for the first serving cell is L1 measurement.

In an embodiment, the measurement for the first serving cell is L3 measurement.

In an embodiment, the measurement for the first serving cell includes L1 measurement.

In an embodiment, the measurement for the first serving cell includes L3 measurement.

In an embodiment, the measurement for the first serving cell includes SSB measurement.

In an embodiment, the measurement for the first serving cell includes CSI-RS measurement.

In an embodiment, the measurement for the first serving cell includes positioning.

In an embodiment, initiating a first process depends on a measurement result for the first candidate cell satisfying the first threshold, and initiating a first process depends on a measurement result for the first serving cell satisfying the third threshold.

In an embodiment, initiating a first process depends on a measurement result for the first candidate cell satisfying the first threshold, and initiating a first process depends on a measurement result for the first serving cell satisfying the third threshold; and the first condition includes a measurement result for the first candidate cell satisfying the second threshold.

In an embodiment, the measurement result for the first serving cell satisfying the third threshold means: An absolute value of a change in the measurement result for the first serving cell is greater than or not less than the third threshold.

In an embodiment, the measurement result for the first serving cell satisfying the third threshold means: A value of a change in the measurement result for the first serving cell is greater than or not less than the third threshold.

In an embodiment, the change in the measurement result for the first serving cell refers to: a change between a previous measurement result for the first serving cell and a current measurement result for the first serving cell.

In an embodiment, the change in the measurement result for the first serving cell refers to: a difference between a previous measurement result for the first serving cell and a current measurement result for the first serving cell.

In an embodiment, the change in the measurement result for the first serving cell refers to: a difference between a current measurement result for the first serving cell and a previous measurement result for the first serving cell.

In an embodiment, the change in the measurement result for the first serving cell refers to: a difference between a current measurement result for the first serving cell and a measurement result for the first serving cell before the first RRC message is received.

In an embodiment, the measurement result for the first serving cell satisfying the third threshold means: The measurement result for the first serving cell is less than or not greater than the third threshold.

In an embodiment, the measurement result for the first serving cell satisfying the third threshold means: The measurement result for the first serving cell is worse than or not better than the third threshold.

In an embodiment, the third threshold is dedicated to early uplink synchronization.

In an embodiment, the third threshold does not depend on the first condition.

In an embodiment, the first RRC message including the third threshold means: The first RRC message configures the configuration information of the first candidate cell, where the configuration information of the first candidate cell includes an ltm-EarlyUL-SyncConfig field or an ltm-EarlyUL-SyncConfigSUL field, and the ltm-EarlyUL-SyncConfig field or the ltm-EarlyUL-SyncConfigSUL field includes the first threshold.

In an embodiment, the third threshold depends on the first condition.

In a sub-embodiment of the foregoing embodiment, the first condition includes the fourth threshold, and the fourth threshold is used for evaluating a measurement result for the first serving cell.

In a sub-embodiment of the foregoing embodiment, the third threshold is represented by an offset of the third threshold relative to the fourth threshold.

In a sub-embodiment of the foregoing embodiment, the offset is in units of dB.

In a sub-embodiment of the foregoing embodiment, the offset is a positive offset.

In a sub-embodiment of the foregoing embodiment, the third threshold is equal to a sum of the fourth threshold and the offset.

In a sub-embodiment of the foregoing embodiment, the first RRC message including the third threshold means: The first RRC message includes the fourth threshold, and the third threshold is represented by the offset of the third threshold relative to the fourth threshold.

In a sub-embodiment of the foregoing embodiment, the first RRC message including the third threshold means: The first RRC message configures the configuration information of the first candidate cell, the configuration information of the first candidate cell includes an ltm-EarlyUL-SyncConfig field or an ltm-EarlyUL-SyncConfigSUL field, and the ltm-EarlyUL-SyncConfig field or the ltm-EarlyUL-SyncConfigSUL field includes the offset.

In an embodiment, the measurement result for the first serving cell satisfying the third threshold includes detecting that a location of the first node leaves or does not belong to a second area.

In a sub-embodiment of the foregoing embodiment, the second area is an area associated with the first serving cell.

In a sub-embodiment of the foregoing embodiment, the second area is configured by the first RRC message.

### Embodiment 9

Embodiment 9 illustrates a schematic diagram of a fourth threshold according to an embodiment of this application, as shown in FIG. 9.

In Embodiment 9, the first condition includes a measurement result for the first serving cell satisfying the fourth threshold, the first RRC message includes the fourth threshold, and the third threshold is different from the fourth threshold.

In an embodiment, initiating a first process depends on a measurement result for the first candidate cell satisfying the first threshold, and initiating a first process depends on a measurement result for the first serving cell satisfying the third threshold; and the first condition includes a measurement result for the first candidate cell satisfying the fourth threshold.

In an embodiment, initiating a first process depends on a measurement result for the first candidate cell satisfying the first threshold, and initiating a first process depends on a measurement result for the first serving cell satisfying the third threshold; and the first condition includes a measurement result for the first candidate cell satisfying the second threshold, and the first condition includes a measurement result for the first serving cell satisfying the fourth threshold.

In an embodiment, the third threshold depends on the first condition.

In an embodiment, the first condition depends on the third threshold.

In an embodiment, the first RRC message includes the third threshold and the fourth threshold.

In an embodiment, the configuration information of the first candidate cell includes the third threshold and the fourth threshold.

In an embodiment, the first condition is that the measurement result for the first serving cell satisfies the fourth threshold.

In an embodiment, the measurement result for the first serving cell is L1 measurement.

In an embodiment, initiating a first process depends on a measurement result for the first serving cell satisfying the third threshold; and the first condition includes a measurement result for the first serving cell satisfying the fourth threshold.

In an embodiment, the measurement result for the first serving cell corresponding to the third threshold and the measurement result for the first serving cell corresponding to the fourth threshold are measurement quantities of a same reference signal.

In a sub-embodiment of the foregoing embodiment, the measurement result for the first serving cell corresponding to the third threshold and the measurement result for the first serving cell corresponding to the fourth threshold each are measurement for an SSB of the first serving cell.

In a sub-embodiment of the foregoing embodiment, the measurement result for the first serving cell corresponding to the third threshold and the measurement result for the first serving cell corresponding to the fourth threshold each are measurement for a CSI-RS of the first serving cell.

In a sub-embodiment of the foregoing embodiment, the measurement result for the first serving cell corresponding to the third threshold and the measurement result for the first serving cell corresponding to the fourth threshold each are measurements for an SSB of the first serving cell or each are measurement for a CSI-RS of the first serving cell.

In a sub-embodiment of the foregoing embodiment, the measurement result for the first serving cell corresponding to the third threshold and the measurement result for the first serving cell corresponding to the fourth threshold are both a same measurement quantity of a same reference signal.

In a sub-embodiment of the foregoing sub-embodiment, the measurement result for the first serving cell corresponding to the third threshold and the measurement result for the first serving cell corresponding to the fourth threshold each are RSRP measurement for an SSB of the first serving cell.

In a sub-embodiment of the foregoing sub-embodiment, the measurement result for the first serving cell corresponding to the third threshold and the measurement result for the first serving cell corresponding to the fourth threshold each are RSRQ measurement for an SSB of the first serving cell.

In an embodiment, the first RRC message including the fourth threshold means: The first RRC message includes a condExecutionCond field, and the condExecutionCond field includes the fourth threshold.

In a sub-embodiment of the foregoing embodiment, the condExecutionCond field is the first condition.

In a sub-embodiment of the foregoing embodiment, the first RRC message includes a condRRCReconfig field, and the condRRCReconfig field includes the configuration information of the first candidate cell.

In an embodiment, the first RRC message including the fourth threshold means: The first RRC message includes a condExecutionCondLTM field, and the condExecutionCondLTM field includes the fourth threshold.

In a sub-embodiment of the foregoing embodiment, the condExecutionCondLTM field is the first condition.

In a sub-embodiment of the foregoing embodiment, the first RRC message includes an LTMcondRRCReconfig field, and the LTMcondRRCReconfig field includes the configuration information of the first candidate cell.

In an embodiment, the third threshold being different from the fourth threshold means: The measurement result for the first serving cell corresponding to the third threshold and the measurement result for the first serving cell corresponding to the fourth threshold are both a measurement quantity of a same reference signal; and values of the third threshold and the fourth threshold are different.

In a sub-embodiment of the foregoing embodiment, the third threshold depends on a second offset and the fourth threshold.

In a sub-embodiment of the foregoing embodiment, the third threshold is equal to a sum of the fourth threshold and the second offset.

In a sub-embodiment of the foregoing embodiment, the second offset is not equal to 0.

In a sub-embodiment of the foregoing embodiment, the second offset is less than 0 or not greater than 0.

In a sub-embodiment of the foregoing embodiment, the second offset is configured by the first RRC message.

In a sub-embodiment of the foregoing embodiment, the third threshold is less than the fourth threshold.

In a sub-embodiment of the foregoing embodiment, the condition that the measurement result for the first serving cell satisfies the third threshold is looser than the condition that the measurement result satisfies the fourth threshold.

In a sub-embodiment of the foregoing embodiment, when the measurement result for the first serving cell satisfies the fourth threshold, the measurement result must also satisfy the third threshold.

In a sub-embodiment of the foregoing embodiment, when the measurement result for the first candidate cell satisfies the third threshold, the measurement result does not necessarily satisfy the fourth threshold.

### Embodiment 10

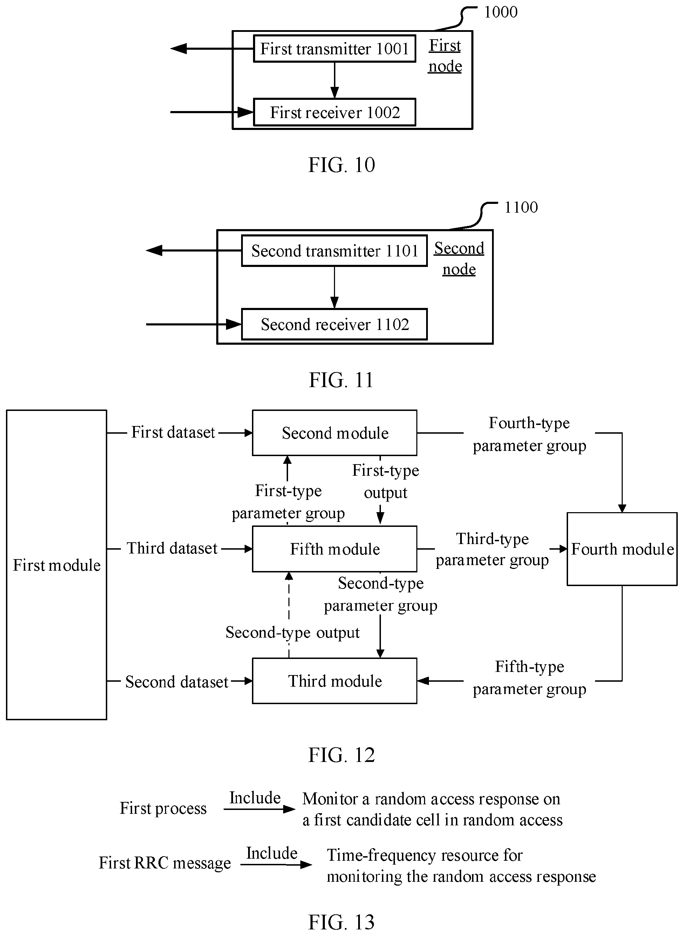

Embodiment 10 illustrates a block diagram of a structure of a processing apparatus in a first node according to an embodiment of this application, as shown in FIG. 10. In FIG. 10, a first processor 1000 in the first node includes a first transmitter 1001 and a first receiver 1002.

The first receiver 1002 receives a first RRC message, where the first RRC message includes a first condition and a target configuration of the first candidate cell, and the first condition is a condition under which the target configuration of the first candidate cell is applied.

The first processor 1000 initiates a first process, where the first process includes initiating random access on the first candidate cell.

In Embodiment 10, initiating a first process depends on at least one of measurement or a first timer not running, and the first process is for early uplink synchronization for the first candidate cell.

In an embodiment, initiating a first process depends on a measurement result for the first candidate cell satisfying a first threshold, and the first RRC message includes the first threshold.

In an embodiment, the first condition includes a measurement result for the first candidate cell satisfying a second threshold, the first RRC message includes the second threshold, the first threshold is different from the second threshold.

In an embodiment, initiating a first process depends on a measurement result for the first serving cell satisfying a third threshold, and the first RRC message includes the third threshold.

In an embodiment, the first condition includes a measurement result for the first serving cell satisfying a fourth threshold, the first RRC message includes the fourth threshold, and the third threshold is different from the fourth threshold.

In an embodiment, the first receiver 1002 receives first signaling, and the first processor 1000 starts the first timer in response to the first signaling being received, where the first signaling indicates a timing advance amount of the first candidate cell.

In an embodiment, the first process includes sending second signaling and receiving third signaling, the second signaling triggers the third signaling, and the third signaling triggers initiation of random access on the first candidate cell.

In an embodiment, the first process includes monitoring a random access response on the first candidate cell in the random access, and the first RRC message includes a time-frequency resource for monitoring the random access response.

In an embodiment, the first receiver 1002 includes at least one of the antenna 452, the receiver 454, the multiple-antenna receive processor 458, the receive processor 456, the controller/processor 459, the memory 460, or the data source 467 in FIG. 4 of this application.

In an embodiment, the first receiver 1002 includes at least the antenna 452 and the receiver 454 in FIG. 4 of this application.

In an embodiment, the first transmitter 1001 includes at least one of the antenna 452, the transmitter 454, the multiple-antenna transmit processor 457, the transmit processor 468, the controller/processor 459, the memory 460, or the data source 467 in FIG. 4 of this application.

In an embodiment, the first transmitter 1001 includes at least the antenna 452 and the transmitter 454 in FIG. 4 of this application.

### Embodiment 11

Embodiment 11 illustrates a block diagram of a structure of a processing apparatus in a second node according to an embodiment of this application, as shown in FIG. 11. In FIG. 11, the processing apparatus 1100 in the second node includes a second transmitter 1101 and a second receiver 1102.

The second transmitter 1101 sends a first RRC message, where the first RRC message includes a first condition and a target configuration of the first candidate cell, and the first condition is a condition under which the target configuration of the first candidate cell is applied.

In Embodiment 11, a receiving party of the first RRC message initiates a first process, where the first process includes initiating random access on the first candidate cell, initiating a first process depends on at least one of measurement or a first timer not running, and the first process is for early uplink synchronization for the first candidate cell.

In an embodiment, initiating a first process depends on a measurement result for the first candidate cell satisfying a first threshold, and the first RRC message includes the first threshold.

In an embodiment, the first condition includes a measurement result for the first candidate cell satisfying a second threshold, the first RRC message includes the second threshold, the first threshold is different from the second threshold.

In an embodiment, initiating a first process depends on a measurement result for the first serving cell satisfying a third threshold, and the first RRC message includes the third threshold.

In an embodiment, the first condition includes a measurement result for the first serving cell satisfying a fourth threshold, the first RRC message includes the fourth threshold, and the third threshold is different from the fourth threshold.

In an embodiment, the first process includes monitoring a random access response on the first candidate cell in the random access, and the first RRC message includes a time-frequency resource for monitoring the random access response.

In an embodiment, the second transmitter 1101 sends first signaling, and the first signaling indicates a timing advance amount of the first candidate cell.

In an embodiment, the second receiver 1102 receives second signaling; and the second transmitter 1101 sends third signaling in response to receiving the second signaling, where the third signaling triggers a receiving party of the third signaling to initiate random access on the first candidate cell.

As an embodiment, the second transmitter 1101 includes at least one of the antenna 420, the transmitter 418, the multi-antenna transmit processor 471, the transmit processor 416, the controller/processor 475, or the memory 476 in FIG. 4 of this application.

As an embodiment, the second transmitter 1101 includes at least the antenna 420 and the transmitter 418 in FIG. 4 of this application.

In an embodiment, the second receiver 1102 includes at least one of the antenna 420, the receiver 418, the multi-antenna receive processor 472, the receive processor 470, the controller/processor 475, or the memory 476 in FIG. 4 of this application.

In an embodiment, the second receiver 1102 includes at least the antenna 420 and the receiver 418 in FIG. 4 of this application.

### Embodiment 12

Embodiment 12 illustrates a schematic diagram of an artificial intelligence processing system according to an embodiment of this application, as shown in FIG. 12. FIG. 12 includes a first module, a second module, a third module, a fourth module, and a fifth module.

In Embodiment 12, the first module sends a first dataset to the second module, the first module sends a second dataset to the third module, the first module sends a third dataset to the fifth module, the fifth module sends a first-type parameter group to the second module, the fifth module sends a second-type parameter group to the third module, the fifth module sends a third-type parameter group to the fourth module, the second module sends a fourth-type parameter group to the fourth module, and the fourth module sends a fifth-type parameter group to the third module.

In an embodiment, the first module, the second module, the third module, the fourth module, and the fifth module all belong to the first node.

The foregoing method avoids air interface signaling interaction and shortens a transmission latency.

In an embodiment, none of the first module, the second module, the third module, the fourth module, and the fifth module belongs to the first node.

The foregoing method reduces hardware complexity of the first node.

In an embodiment, at least the first module in the first module, the second module, the third module, the fourth module, and the fifth module belongs to the first node; and at least one of the first module, the second module, the third module, the fourth module, and the fifth module does not belong to the first node.

The foregoing method balances hardware complexity and a transmission latency of the first node.

In an embodiment, the first module is used for data collection (Data Collection).

In an embodiment, the first module is responsible for data collection.

In an embodiment, the first module has a data collection function.

In an embodiment, the second module is used for model training (Model Training).

In an embodiment, the second module is responsible for model training.

In an embodiment, the second module has a model training function.

In an embodiment, the second module performs AI/ML model training (model training).

In an embodiment, the second module performs validation (validation).

In an embodiment, the second module performs testing (testing).

In an embodiment, the second module generates a model performance metric (model performance metrics).

In an embodiment, the second module is responsible for data preparation (data preparation).

In an embodiment, the data preparation includes at least one of data pre-processing (data pre-processing), cleaning (cleaning), formatting (formatting), or transformation (transformation).

In an embodiment, the third module is used for inference (Inference).

In an embodiment, the third module has an inference function.

In an embodiment, the third module is responsible for inference.

In an embodiment, the fourth module is used for model storage (Model Storage).

In an embodiment, the fourth module has a model storage (Model Storage) function.

In an embodiment, the fourth module is responsible for storing a trained model.

In an embodiment, the fourth module is responsible for storing a trained model that can be used to perform inference processing.

In an embodiment, the fifth module is used for management (Management).

In an embodiment, the fifth module is responsible for management.

In an embodiment, the fifth module has a management function.

In an embodiment, the first dataset is training data (Training Data).

In an embodiment, the second dataset is inference data (Inference Data).

In an embodiment, the third dataset is monitoring data (Monitoring Data).

In an embodiment, the first-type parameter group includes a monitoring output (Monitoring output).

In an embodiment, the second-type parameter group includes a management instruction (Management Instruction).

In an embodiment, the second-type parameter group is used for a fine-tuning (fine-tune) operation of the inference function.

In an embodiment, the second-type parameter group includes an identifier of a model.

In an embodiment, the second-type parameter group is used for model selection.

In an embodiment, the second-type parameter group is used for model switching.

In an embodiment, the second-type parameter group is used for model activation/deactivation.

In an embodiment, the second-type parameter group is used for falling back from an AI-ML operation to a non-AI-ML operation.

In an embodiment, the third-type parameter group includes a model conversion request (Model Transfer Request).

In an embodiment, the third-type parameter group includes a model delivery request (Model Delivery Request).

In an embodiment, the fourth-type parameter group includes a trained model (Trained Model).

In an embodiment, the fourth-type parameter group includes an updated model (Updated Model).

In an embodiment, the fourth-type parameter group indicates an identifier of a model.

In an embodiment, the fifth-type parameter group includes a model transfer (Model Transfer).

In an embodiment, the fifth-type parameter group includes a model delivery (Model Delivery).

In an embodiment, the fifth-type parameter group indicates an identifier of a model.

In an embodiment, the first-type output includes a monitoring output (monitoring output).

In an embodiment, the first-type output exists.

In an embodiment, the first-type output does not exist.

In an embodiment, the second-type output includes an inference output (Inference Output).

In an embodiment, the second-type output is used by the fifth module to monitor performance of an AI/ML model.

In an embodiment, the second-type output is used by the fifth module to monitor performance of an AI/ML function.

In an embodiment, the second-type output exists.

In an embodiment, the second-type output does not exist.

In an embodiment, the artificial intelligence processing system generates or assists in generating at least one of determining of whether to initiate the first process or determining of whether the first condition is satisfied.

In an embodiment, the fifth module generates or assists in generating at least one of determining of whether to initiate the first process or determining of whether the first condition is satisfied.

In an embodiment, the third module generates or assists in generating at least one of determining of whether to initiate the first process or determining of whether the first condition is satisfied.

In an embodiment, the second-type output includes at least one of determining of whether to initiate the first process or determining of whether the first condition is satisfied.

In an embodiment, at least one of the first dataset or the second dataset includes the first RRC message.

In an embodiment, at least one of the first dataset or the second dataset includes the target configuration.

In an embodiment, at least one of the first dataset or the second dataset includes the first condition.

In an embodiment, at least one of the first dataset or the second dataset includes a measurement result for the first candidate cell.

In an embodiment, at least one of the first dataset or the second dataset includes a measurement result for the first serving cell.

In an embodiment, at least one of the first dataset or the second dataset includes the first signaling.

In an embodiment, at least one of the first dataset or the second dataset includes the third signaling.

In an embodiment, at least one of the first dataset or the second dataset includes the first threshold.

In an embodiment, at least one of the first dataset or the second dataset includes the second threshold.

In an embodiment, at least one of the first dataset or the second dataset includes the third threshold.

In an embodiment, at least one of the first dataset or the second dataset includes the fourth threshold.

In an embodiment, at least one of the first dataset, the second dataset, or the third dataset includes the first RRC message.

In an embodiment, at least one of the first dataset, the second dataset, or the third dataset includes the target configuration.

In an embodiment, at least one of the first dataset, the second dataset, or the third dataset includes the first condition.

In an embodiment, at least one of the first dataset, the second dataset, or the third dataset includes a measurement result for the first candidate cell.

In an embodiment, at least one of the first dataset, the second dataset, or the third dataset includes a measurement result for the first serving cell.

In an embodiment, at least one of the first dataset, the second dataset, or the third dataset includes the first signaling.

In an embodiment, at least one of the first dataset, the second dataset, or the third dataset includes the third signaling.

In an embodiment, at least one of the first dataset, the second dataset, or the third dataset includes the first threshold.

In an embodiment, at least one of the first dataset, the second dataset, or the third dataset includes the second threshold.

In an embodiment, at least one of the first dataset, the second dataset, or the third dataset includes the third threshold.

In an embodiment, at least one of the first dataset, the second dataset, or the third dataset includes the fourth threshold.

In an embodiment, Embodiment 12 is merely intended to describe that this application can be used for the artificial intelligence processing system, this embodiment does not limit applying this application to a non-artificial intelligence processing system, and this embodiment does not limit applying this application to another type of artificial intelligence processing system to achieve effects comparable to the artificial intelligence processing system shown in FIG. 12.

### Embodiment 13

Embodiment 13 illustrates a schematic diagram of receiving a random access response on a first candidate cell according to an embodiment of this application, as shown in FIG. 13.

In Embodiment 13, the first process includes monitoring a random access response on the first candidate cell in the random access, and the first RRC message includes a time-frequency resource for monitoring the random access response.

In an embodiment, the time-frequency resource of the random access response refers to a PDCCH configuration for receiving the random access response.

In an embodiment, the PDCCH configuration includes CORESET information.

In an embodiment, the PDCCH configuration includes a configuration of search space.

In a sub-embodiment of the foregoing embodiment, the search space is common search space.

In a sub-embodiment of the foregoing embodiment, the search space is a Type1-PDCCH.

In an embodiment, the PDCCH configuration refers to a PDCCH configuration of the first candidate cell.

In an embodiment, the random access is CFRA.

In an embodiment, the time-frequency resource of the random access response includes frequency domain resource information of a PDCCH for monitoring the random access response and information about a quantity of OFDM symbols occupied in time domain.

In an embodiment, the time-frequency resource of the random access response includes a PDCCH starting OFDM symbol, a monitoring period, and associated CORESET information.

In an embodiment, the monitoring the random access response on the first candidate cell refers to: monitoring the random access response on the time-frequency resource of the first candidate cell configured by the first RRC message.

In an embodiment, monitoring the random access response on the first candidate cell includes: monitoring a PDCCH on the first candidate cell based on a configuration in the first RRC message.

In an embodiment, monitoring the random access response on the first candidate cell includes: descrambling DCI on the monitored PDCCH using an RA-RNTI corresponding to the first Preamble sent in the first process.

In an embodiment, monitoring the random access response on the first candidate cell includes: using a RAPID corresponding to the first Preamble sent in the first process to match a sub-PDU in a MAC PDU received through scheduling of the DCI.

A person of ordinary skill in the art may understand that all or some steps of the foregoing methods may be implemented by a program instructing relevant hardware. The program may be stored in a computer-readable storage medium, such as a read-only memory, a hard disk, or an optical disc. Optionally, all or some of the steps in the foregoing embodiments may alternatively be implemented by using one or more integrated circuits. Correspondingly, the modules and units in the foregoing embodiments may be implemented in a form of hardware, or may be implemented in a form of a software functional module. This application is not limited to any specific form of a combination of software and hardware. The user equipment, the terminal, and the UE in this application include but are not limited to wireless communication devices such as a drone, a communication module on a drone, a remote-controlled aircraft, a flight vehicle, a small aircraft, a mobile phone, a tablet computer, a notebook computer, a vehicle-mounted communication device, a wireless sensor, a USB dongle, an Internet of things terminal, an RFID terminal, an NB-IOT terminal, an MTC (Machine Type Communication, machine type communication) terminal, an eMTC (enhanced MTC, enhanced MTC) terminal, a data card, a USB dongle, a vehicle-mounted communication device, a low-cost mobile phone, and a low-cost tablet computer. The base station or system device in this application includes but is not limited to a macro cellular base station, a micro cellular base station, a home base station, a relay base station, a gNB (NR NodeB) NR NodeB, a TRP (Transmitter Receiver Point, transmission reception point), and another wireless communication device.

The foregoing descriptions are merely example embodiments of this application, and are not intended to limit the protection scope of this application. Any modification, equivalent replacement, improvement, and the like made within the spirit and principles of this application shall all fall within the protection scope of this application.

## Claims

1. A first node used for wireless communication, comprising:
a first receiver, configured to receive a first RRC message, wherein the first RRC message comprises a first condition and a target configuration of a first candidate cell, and the first condition is a condition under which the target configuration of the first candidate cell is applied; and
a first processor, configured to initiate a first process, wherein
the first process comprises initiating random access on the first candidate cell, and initiating a first process depends on at least one of measurement or a first timer not running; or the first process comprises starting UE-based timing advance measurement, and initiating a first process depends on at least the former of the measurement and the first timer not running; and the first process is for early uplink synchronization for the first candidate cell.

2. The first node according to claim 1, wherein initiating a first process depends on a measurement result for the first candidate cell satisfying a first threshold, and the first RRC message comprises the first threshold.

3. The first node according to claim 2, wherein the first condition comprises a measurement result for the first candidate cell satisfying a second threshold, the first RRC message comprises the second threshold, and the first threshold is different from the second threshold.

4. The first node according to any one of claims 1 to 3, wherein initiating a first process depends on a measurement result for a first serving cell satisfying a third threshold, and the first RRC message comprises the third threshold.

5. The first node according to claim 4, wherein the first condition comprises a measurement result for the first serving cell satisfying a fourth threshold, the first RRC message comprises the fourth threshold, and the third threshold is different from the fourth threshold.

6. The first node according to any one of claims 1 to 5, wherein:
the first receiver is configured to receive first signaling; and
the first processoris configured to start the first timer in response to the first signaling being received, wherein
the first signaling indicates a timing advance amount of the first candidate cell.

7. The first node according to any one of claims 1 to 6, wherein the first process comprises sending second signaling and receiving third signaling, the second signaling triggers the third signaling, and the third signaling triggers initiation of random access on the first candidate cell.

8. The first node according to any one of claims 1 to 7, wherein the first process comprises monitoring a random access response on the first candidate cell in the random access, and the first RRC message comprises a time-frequency resource for monitoring the random access response.

9. A second node used for wireless communication, comprising:
a second transmitter, configured to send a first RRC message, wherein the first RRC message comprises a first condition and a target configuration of the first candidate cell, and the first condition is a condition under which the target configuration of the first candidate cell is applied, wherein
a receiving party of the first RRC message initiates a first process, wherein the first process comprises initiating random access on the first candidate cell, and initiating a first process depends on at least one of measurement or a first timer not running; or the first process comprises starting UE-based timing advance measurement, and initiating a first process depends on at least the former of the measurement and the first timer not running; and the first process is for early uplink synchronization for the first candidate cell.

10. A method in a first node used for wireless communication, comprising:
receiving a first RRC message, wherein the first RRC message comprises a first condition and a target configuration of the first candidate cell, and the first condition is a condition under which the target configuration of the first candidate cell is applied; and initiating a first process, wherein
the first process comprises initiating random access on the first candidate cell, and initiating a first process depends on at least one of measurement or a first timer not running; or the first process comprises starting UE-based timing advance measurement, and initiating a first process depends on at least the former of the measurement and the first timer not running; and the first process is for early uplink synchronization for the first candidate cell.

11. A method in a second node used for wireless communication, comprising:
sending a first RRC message, wherein the first RRC message comprises a first condition and a target configuration of a first candidate cell, and the first condition is a condition under which the target configuration of the first candidate cell is applied, wherein
a receiving party of the first RRC message initiates a first process, wherein the first process comprises initiating random access on the first candidate cell, and initiating a first process depends on at least one of measurement or a first timer not running; or the first process comprises starting UE-based timing advance measurement, and initiating a first process depends on at least the former of the measurement and the first timer not running; and the first process is for early uplink synchronization for the first candidate cell.
